# EUROPÄISCHE PATENTSCHRIFT

(11) **EP 1 264 522 B1**
(45) Veröffentlichungstag und Bekanntmachung des Hinweises auf die Patenterteilung: **17.08.2005**
(21) Anmeldenummer: 01919316.8
(22) Anmeldetag: 20.02.2001
(51) Int. Cl.: H05K 7/18

(54) **VERTEILERSCHRANK**
DISTRIBUTION CABINET
COFFRET DE DISTRIBUTION

(30) Priorität: 23.02.2000 DE 20003279 U
(43) Veröffentlichungstag der Anmeldung: 11.12.2002
(73) Patentinhaber: KRONE GmbH, 14167 Berlin (DE)
(72) Erfinder: IRMER, Günter, 13055 Berlin (DE)
(86) Internationale Anmeldenummer: PCT/EP2001/001890
(87) Internationale Veröffentlichungsnummer: WO 2001/063997

(56) Entgegenhaltungen:
- EP-A- 0 514 668
- WO-A-00/60713
- WO-A-97/34346
- DE-A- 19 807 804
- DE-A- 19 910 520
- DE-U- 7 528 226
- DE-U- 8 107 658

## Beschreibung

### I. Anwendungsgebiet

Die Erfindung betrifft einen Verteilerschrank, der in der Regel im Freien aufgestellt ist und die Verteilanlagen für Schwachstromsysteme, beispielsweise Telefonanlagen, mit zugehörigen Stromversorgungseinrichtungen und Kabelab-/-anschlusseinrichtungen für ein bestimmtes räumliches Gebiet aufnimmt.

### II. Technischer Hintergrund

Derartige Verteüerschränke müssen - neben einer ausreichenden baulichen Stabilität sowie einer Widerstandsfähigkeit gegen Vandalismus etc. - heute weitere Forderungen erfüllen, beispielsweise dürfen keine zu starken elektromagnetischen Strahlungen an die Umgebung abgegeben werden, und für den Einsatz vor allem in wärmeren Ländern dürfen die Temperaturen im Inneren des Verteilerschrankes nicht zu hoch ansteigen trotz der dort untergebrachten, wärmeabgebenden elektrischen Baugruppen, aber auch nicht zu tief absinken.

Derartige Verteilerschränke werden grundsätzlich entweder aus Metall oder aus Kunststoff hergestellt, wobei Kunststoff den Vorteil einer billigeren Herstellbarkeit mit dem Vorteil eines elektrisch nicht leitenden Materiales verbindet, so daß selbst bei außerplanmäßigen Kontaktierungen des Gehäuses des Verteilerschrankes durch ein elektrisches Bauelement nie die Gefahr besteht, daß bei Berühren des Gehäuses von außen die betreffende Person einen Stromschlag erhält.

Was die ausreichende Kühlmöglichkeit derartiger Verteilerschränke angeht, ist es bereits bekannt, eine Kühlung durch Luftzirkulation zu bewirken. Zu diesem Zweck sind - bisher nur bei aus Stahlblech bestehenden Verteilerschränken - die Wände des Korpus doppelwandig ausgeführt, wobei im Zwischenraum zwischen den Wänden die Umgebungsluft zirkulieren, also unten eintreten und oben austreten, kann, wodurch einerseits ein Aufheizen des Inneren durch das Sonnenlicht und andererseits eine Wärmeabfuhr an der inneren Wand, die durch die elektrischen Baugruppen im Hauptraum aufgeheizt werden, bewirkt wird.

Eine solche doppelwandige Bauweise ist zwar theoretisch auch bei aus Kunststoff hergestellten Verteilerschränken möglich, wegen der dort notwendigen größeren Wandstärken und der durch Normungen in den verschiedenen Ländern vorgegebenen Außen- bzw. Innenabmessungen würde dies jedoch zu zu geringen inneren Freiräumen bzw. äußeren Gesamtabmessungen führen.

Zusätzlich ist es von großer Bedeutung, dass derartige Verteilerschränke den zulässigen Höchstwert an abgegebener elektromagnetischer Strahlung nach außen nicht überschreiten, also die EMV (elektromagnetische Verträglichkeit) gewährleistet ist.

### III. Darstellung der Erfindung

### a) Technische Aufgabe

Es ist daher die Aufgabe der vorliegenden Erfindung, einen Verteilerschrank bzw. einen Bausatz zur Herstellung eines solchen Verteilerschrankes zu schaffen, wobei der Verteilerschrank wenigstens teilweise aus Kunststoff besteht, und dennoch eine ausreichend gute Abschirmung gegen elektromagnetische Abstrahlung einerseits sowie eine ausreichende Kühlmöglichkeit andererseits bietet.

### b) Lösung der Aufgabe

Diese Aufgabe ist durch die Merkmale des Anspruchs 1 gelöst. Vorteilhafte Ausführungsformen ergeben sich aus den Unteransprüchen.

Bisher bestanden aus Kunststoff gefertigte Verteilerschränke in aller Regel aus einem Sockelkasten, der an der Oberseite meist offen war und ebenso an der Unterseite, da hier die im Erdboden verlegten Kabel in den Sockel eingeführt wurden, einem auf dem Sockel aufgesetzten Korpus, an dem eine oder zwei Türen bzw. Klappen zum Öffnen des Korpus vorhanden waren, um die elektrischen Einheiten im Inneren des Korpus zu montieren bzw. zu warten und zu prüfen, sowie einen den an der Oberseite offenen Korpus und einen nach oben gegen Regen und andere Einflüsse schützenden, in der Regel dicht aufgesetzten, Deckel.

Zusätzlich konnte der Korpus eine Bodenplatte als integrales oder separates Bauteil aufweisen, welches - bis auf die Durchlässe für die Kabel - den Hauptraum im Inneren des Korpus gegenüber dem Sockelraum abtrennte.

Ein erfindungsgemäßer Verteilerschrank kann aus diesen bekannten Bauteilen durch Hinzunahme eines Montagerahmens geschaffen werden, der insbesondere aus abgelenkten Abschnitten eines endlosen Profiles zusammengesetzt ist. Durch spezifische Gestaltung des Profiles kann einerseits der Zusammenbau zu einem - dreidimensionalen - Montagerahmen sehr vereinfacht werden und zusätzlich die wahlweise Anbringung einer EMV-Abschirmung und/oder die Erstellung einer doppelschaligen Wand des Verteüerschrankes zwecks Belüftung und Kühlung erleichtert werden.

Das Profil weist dabei - im Querschnitt betrachtet - vorzugsweise einen etwa rechteckigen Querschnitt auf, insbesondere zwei im rechten Winkel zueinander verlaufende, geschlossene Außenflächen. Die beiden anderen nach innen weisenden Außenflächen weisen jeweils eine nach außen offene Einstecktasche zum Einstecken von Einsteckplatten auf, deren Einsteckrichtung parallel zu den geschlossene Außenflächen angeordnet ist und die vorzugsweise auch in ihrer Seitenfläche des Profiles möglichst weit außen angeordnet sind.

Vorzugsweise entsteht dadurch ein im Querschnitt geschlossenes Hohlkammerprofil in der lnnenecke des Profiles, welches das Profil stabilisiert, insbesondere, wenn die Querschnittsform der Hohlkammer eine oder mehrere Ausbuchtungen, vorzugsweise nach außen gerichtet, aufweist.

Diese Ausbuchtungen ergeben sich bei Anordnung im wesentlichen gleichbleibender Wandstärken einerseits durch die bereits erwähnten Einstecktaschen, und andererseits wenigstens eine, vorzugsweise genau eine, - hinsichtlich ihrer Einsteckrichtung parallel zu einer der Einstecktaschen verlaufende - weitere Tasche 57. die nach außen offen ist, jedoch in ihrem Verlauf Hinterschneidungen, vorzugsweise symmetrisch zueinander in beiden Flanken angeordnet, aufweist. Diese Hinterschneidungen dienen zum Anordnen und Verspannen einer Nutmutter.

Mit dieser Gestaltung ist es möglich, einerseits drei solcher Profilabschnitte auf relativ einfache Art und Weise zu einer dreidimensionalen Eckverbindung miteinander zu verbinden:

Dies geschieht durch Ablängen auf Gehrung zweier Profilabschnitte und Gegeneinanderlegen. Diese dreidimensionale Eckverbindung wird gesichert durch einen Winkel, der mit seinen Schenkeln in die offenen Enden - von der Gehrung her - der Hinterschneidung der Tasche eingeschoben und dort mittels zum Beispiel Klemmschrauben fixiert wird oder auch auf den Außenseiten der beiden Profilabschnitte befestigt wird.

indem dieser Winkel oder eine Nutmutter eine Gewindebohrung in Richtung des dritten noch fehlenden Winkelprofiles aufweist, kann dieser dritte Winkel stumpf auf die beiden bereits miteinander verbundenen ersten Winkel aufgesetzt und mittels einer Spannschraube gegen den Winkel oder die Nutmutter fixiert werden, die in Längsrichtung der Tasche und innerhalb dieser Tasche des dritten Profiles angeordnet wird und in die Gewindebohrung des Winkels oder der Nutmutter eingeschraubt werden kann. Diese Spannschraube ist in ihrer Längsrichtung im dritten Profil gesichert mit Hilfe eines dort in einer Querbohrung angeordneten, querverlaufenden Gewindebolzens oder mit Hilfe anderer Möglichkeiten.

Alle für die Eckverbindung notwendigen Zusatzelemente befinden sich dabei innerhalb des Querschnittes der drei die Ecke bildenden Profilabschnitte.

Die Profilgestaltung kann weiterhin sehr einfach zur Komplettierung des aus den Profilabschnitten gebildeten Montagerahmens verwendet werden, indem in die Einstecktaschen passend zugeschnittene Einsteckplatten eingesteckt werden, so dass die jeweilige Seite des Montagerahmens eine mehr oder weniger geschlossene Seite wird, nämlich dann, wenn es sich bei den Platten um durchgehende Platten ohne Durchbrüche handelt.

Sofern mittels der Einsteckplatten die EMV-Abschirmung erreicht werden soll, werden diese Platten aus Metall bestehen oder metallische Anteile als Beschichtung oder Beimengung, falls die Platten an sich aus Kunststoff bestehen, aufweisen. Zusätzlich wird dann vorzugsweise zwischen den Kanten der Platten und den Nuten der sie aufnehmenden Einstecktaschen eine EMV-Dichtung eingelegt werden.

Diese Platten können jedoch auch der Bildung der Innenschale eines zweischaligen Verteilerschrankes dienen, wobei der äußere Korpus die äußere Schale bildet. Der dazwischen vorhandene Luftraum dient der Belüftung und Kühlung, indem - da der Luftraum oben und unten offen ist - aufgrund des Kamineffektes Luft, vorzugsweise aus der Umgebung, unten einströmt und oben ausströmt und dabei im Zwischenraum, insbesondere von der von der Sonne bestrahlten äußeren Wandung, abtransportiert wird. Die äußere Wandung wird dabei vorzugsweise aus Kostengründen und aus Gründen der Aufheizung aus Kunststoff bestehen.

Auf diese Art und Weise kann mit Hilfe eines entsprechenden Bausatzes der im Inneren des äußeren Korpus befindliche Montagrahmen nicht nur zur Anordnung der elektrischen Bauteile verwendet werden, sondern auch zur wahlweisen Ausstattung mit einer EMV-Abschirmung, mit einer zweiten Innenschale zwecks belüftetem zweischaligem Schrankgehäuse, wobei beide Dinge auch funktionsvereinigt durch entsprechende Platten werden können.

Unabhängig davon kann durch Komplettierung mittels weiterer Bauteile eine weitere Verbesserung geschaffen werden, wobei insbesondere - im Gegensatz zu den bisher beschriebenen bekannten Bauteilen - Zusatzteile zur Ergänzung nicht mehr unbedingt aus Kunststoff bestehen müssen, sondern auch aus anderen Materialien, beispielsweise Aluminium oder Stahlblech, insbesondere aus Edelstahl, sei es aus Gründen der Abschirmung gegen elektromagnetische Strahlung (EMV-Abschirmung), sei es aus Gründen der Wärmeleitfähigkeit.

Ein solches Zusatzteil kann ein oberes Zwischenteil sein, welches zwischen den oberen Rand des Korpus und den nach oben abschließenden Deckel, insbesondere dicht gegenüber dem Korpus abschließend, gesetzt wird. Dieses obere Zwischenteil dient manchmal der Beheizung, meist aber der zusätzlichen Temperaturreduzierung im Inneren des Hauptraumes, also im Inneren des Kpus, und damit des Montagerahmens in dem dieser Innenraum mittels des oberen Zwischenteiles gekühlt wird, und zwar je nach Anforderung auf unterschiedliche Art und Weise.

An dem oberen Zwischenteil, welches neben einem außen umlaufenden Rand auch einen Zwischenboden aufweist, der vorzugsweise den Hauptraum des Korpus nach oben hin abdichtet, können an der Unterseite des Zwischenbodens, also auch u. U. auch etwas in den Hauptraum des Korpus hineinragend, ein oder mehrere untere Kühlkörper befestigt sein. Diese entziehen der Luft, die im lnneren des Hauptraumes zirkuliert, beim Entlangstreichen unter der Decke, also der Unterseite des Zwischenbodens. Wärme, indem dieser Kühlkörper - in der Regel ein Rippenkörper - seine Wärme durch Wärmeleitung an das ebenfalls gut wärmeleitende Material des Zwischenbodens abgibt, mit dem er fest verbunden, eventuell sogar einstückig ausgebildet, ist.

Das obere Zwischenteil selbst ist oberhalb seines Zwischenbodens zur Umgebung hin nicht abgedichtet, sondern weist Öffnungen auf, beispielsweise in den Seitenrändern angeordnete Schlitze, die dem Ein- und Austreten von Umgebungsluft dienen, welche beim Entlangstreichen über die Oberseite des Zwischenbodens Wärme abführt. Dies kann verstärkt werden, wenn an der Oberseite des Zwischenbodens wiederum ein oberer Kühlkörper, vorzugsweise an derselben Stelle wie der untere Kühlkörper, angeordnet ist. Oberer und unterer Kühlkörper können auch einstückig miteinander ausgebildet und dicht in einem entsprechenden Durchbruch des Zwischenbodens angeordnet sein.

Diese Wirkung ist um so stärker, je größer die Fläche des Kühlkörpers ist, weshalb dieser in der Regel mehr als die Hälfte, etwa zwei Drittel oder drei Viertel, der Fläche des Zwischenbodens bedecken wird.

Um das Entlangstreichen von Luft entlang der Kühlrippen auf der Oberseite des Zwischenbodens zu optimieren, ist es insbesondere vorteilhaft, diese Kühlrippen - in der Aufsicht auf die Oberseite des oberen Zwischenteiles betrachtet - insbesondere sternförmig radial, beispielsweise von der Mitte des Zwischenbodens aus abstrebend anzuordnen, und dabei den Bereich um den geometrischen Kreuzungspunkt dieser radial verlaufenden Kühlrippen freizulassen, um dort ein passives, also nicht angetriebenes, Radial-Lüfterrad drehbar um eine senkrechte Achse anzuordnen. Das Radial-Lüfterrad weist dabei insbesondere in der Aufsicht bogenförmig gekrümmte Schaufeln auf.

Durch eine solche Anordnung wird - vor allem wenn in den Seitenrändern des oberen Zwischenteiles auf Höhe der Kühlrippen bzw. des Lüfters umlaufend Lüftungsschlitze in ausreichender Anzahl und Größe vorhanden sind - durch in die Lüftungsschlitze von außen hineinblasenden Wind das Lüfterrad angetrieben, und drückt dadurch auf den gegenüberliegenden Seiten Luft radial zwischen den Kühlrippen nach außen, wodurch eine besonders große Anzahl von Kühlrippen ständig von Außenluft bestrichen wird.

Daneben ist optional eine Funktionsöffnung im Zwischenboden angeordnet, die entweder durch einen Funktionsdeckel fest verschlossen sein kann, oder deren Funktionsdeckel per Hand oder auch automatisch, nämlich bei Überschreiten einer bestimmten Schwellentemperatur im Inneren des Hauptraumes, geöffnet werden kann oder welche statt dessen bzw. darüber hinaus der Aufnahme weiterer Bauteile dienen kann.

Die Funktionsteile, die in die Funktionsöffnung eingesetzt werden - wobei es im wesentlichen unerheblich ist, ob sich die Funktionsteile dabei mehr oberhalb oder mehr unterhalb des Zwischenbodens in vertikaler Richtung erstrecken - können für die passive Kühlung des Hauptraumes bei geöffneter Funktionsöffnung ein eingesetzter Luftfilter mit einem EMV-Filter sein oder auch ein aktiver, elektrisch betriebener Lüfter, der dann durch die Funktionsöffnung hindurch warme Luft aus dem Inneren des Korpus absaugt oder auch der vorbeschriebene passive Lüfter, der dann in der Höhe vorzugsweise oberhalb des Zwischenbodens plaziert ist, in den Bereich oberhalb des Zwischenbodens des oberen Zwischenteiles und durch die dort vorhandenen Öffnungen in die Umgebung hinauspreßt.

Auch das Einsetzen eines Luft/Luft-Wärmetauschers ist möglich, der vorzugsweise jeweils offene Primär- und Sekundärkreise aufweist, und wobei durch den einen Kreis Luft des Hauptraumes, also aus dem Korpus, hindurchströmt, während durch den anderen Kreis Luft aus dem Bereich oberhalb des Zwischenbodens hindurchströmt, also von außen eingeströmte Umgebungsluft. Damit ist die Luft des Hauptraumes immer noch gegenüber der Umgebungsluft getrennt und von dieser abgedichtet, so daß das Eindringen von Verschmutzungen unterbunden wird.

Das Hindurchströmen der beiden Luftarten durch die jeweiligen offenen Kreise des Wärmetauschers kann auf einer oder auf beiden Seiten jeweils durch angetriebene, vorzugsweise elektrisch betriebene, Lüfter unterstützt werden. Es kann auch nur einer der beiden Kreisläufe vorhanden sein, während der andere Kreislauf fehlt, und nur über eine entsprechend große äußere Oberfläche des Wärmetauschers die andere Luftart darüberströmt und über Konvektion Wärme zuführt bzw. abführt.

Ein anderes Zusatzteil kann ein - vor allem speziell gestalteter - Montagerahmen im Inneren des Korpus sein. Der Montagerahmen ist vorzugsweise ein aus Aluminiumprofilen zusammengesetzter selbstragender Rahmen, der nahe der Innenseiten des Korpus verläuft, eine hohe Stabilität besitzt, und an dem die elektrischen Baugruppen befestigt und mit den Kabeln verbunden werden.

Zu diesem Zweck ist der Montage-Rahmen vorzugsweise quaderförmig gestaltet mit offenen Seitenflächen, wobei die Profile entlang aller Kanten des Quaders verlaufen. Vorzugsweise ist dabei die horizontal verlaufende Querstrebe an der oberen, hinteren Kante - betrachtet von den frontseitigen Türen des Korpus aus - nach unten versetzt, um dort notwendige Einbauten besser fixieren zu können.

In der Vorderfläche des Montage-Rahmens ist zusätzlich ein rechteckiger, vertikal stehender zweidimensionaler Rahmen als Baugruppenträger vorhanden, welcher in Horizontalrichtung verschiebbar an den oberen und unteren vorderen Querstreben des Montagerahmens angeordnet ist. Die elektrischen Baugruppen werden an diesem Baugruppenträger befestigt, und können so entsprechend der Position der von unten heranreichenden Kabel durch Verschieben des Baugruppenträgers positioniert werden. Es können auch mehr als ein solcher Baugruppenträger im Montagerahmen vorhanden sein.

Ansonsten sind alle Außenflächen des Montagerahmens offen, und nicht flächig geschlossen. Zusätzlich besitzt der Verteilerschrank eine EMV-Abschirmung, die auf unterschiedliche Art und Weise realisiert sein kann, jedoch immer aus einem Material bestehen muß, welches elektromagnetische Strahlung nicht hindurchtreten läßt.

Dieses Material kann in ausreichender Konzentration dem Kunststoff, aus welchem der Korpus und/oder die Türen und/oder der Deckel und/oder der Sockel usw. bestehen, beigemischt sein, oder die genannten Kunststoffteile können auf der Innenseite mit einer Beschichtung, die dieses Material enthält bzw. aus diesem Material besteht, versehen sein, oder der Hauptraum ist wenigstens auf seinen Umfangsseiten, vorzugsweise auch nach unten und nach oben, mit einem Gewebe dieses Materials ausgekleidet bzw. mit Blechen oder Lochblechen dieses Materiales.

Die Befestigung in den beiden letztgenannten Fällen kann entweder auf den Innenseiten des Korpus bzw. der Türen oder auf den Außenseiten des Montagerahmens vorgesehen werden.

Dabei ist es besonders vorteilhaft, den Montagerahmen nicht am Korpus, sondern ausschließlich am Sockel bzw. einem auf dem Sockel aufgesetzten unteren Zwischenteil zu befestigen und zusätzlich keine - in Querrichtung betrachteten - Hinterschneidungen zwischen Montagerahmen und Korpus zuzulassen.

Denn dadurch soll eine Umrüstung bestehender Verteilerschränke ohne Betriebsunterbrechung dadurch ermöglicht werden, daß die innerhalb des Montageraumes fixierten und angeschlossenen elektrischen Bauelemente dort verbleiben und auch nicht abgeklemmt werden müssen, und dennoch Deckel und Korpus nach oben abgehoben werden können.

Dies ist häufig notwendig, um entweder den beschädigten Korpus auszutauschen, oder um den Korpus gegen eine andere Art von Korpus, beispielsweise einen EMV-dichten Korpus, auszutauschen, oder um zwischen der Außenseite des Montagerahmens und der Innenseite des Korpus eine EMV-Abschirmung montieren und danach den alten Korpus wieder aufsetzen zu können.

Ein weiteres Zusatzteil ist das untere Zusatzteil, welches zwischen dem oben offenen Sockelkasten und dem unteren Rand des Korpus bzw. des Montagerahmens positioniert ist.

Dieses untere Zwischenteil ist ebenfalls wieder wannenförmig ausgebildet, mit einem Zwischenboden und einem umlaufenden Rand, und es sind ebenfalls wieder Öffnungen vorhanden, um Luft der Umgebung in den Bereich unterhalb des Zwischenbodens eindringen zu lassen.

Vorzugsweise wird hier eine Gestaltung gewählt, wonach im oberen Bereich des Sockelkastens deren äußere Wand nach innen zurückversetzt ist, und damit ein horizontaler Abstand zwischen dieser Wand des Sockelkastens und dem äußeren Rand des unteren Zwischenteiles verbleibt, welcher als Öffnung dient, so daß diese Öffnung von der Seite bzw. seitlich oben nicht sichtbar ist. Das gleiche Prinzip kann auch beim oberen Zwischenteil angewandt werden.

Der Zwischenboden des Zwischenteiles ist nicht vollständig geschlossen, sondern weist über seine Fläche verteilt mehrere Kabeldurchgangsöffnungen auf, die wahlweise durch Deckel verschließbar sind, welche einerseits gegen Verschmutzung, aber auch gegen elektromagnetische Abstrahlung abdichtend wirken. Aus diesem Grund ist vorzugsweise auch das untere Zwischenteil sowie die die Kabeldurchgangsöffnung verschließenden Deckel wiederum aus einem EMV-abschirmenden Material, beispielsweise Aluminium, hergestellt.

Zusätzlich kann der Zwischenboden dieses unteren Zwischenteils auch eine oder mehrere Funktionsöffnungen aufweisen, die sinngemäß den gleichen Zwecken und damit dem Einbau der gleichen Funktionsteile dienen kann, wie anhand des oberen Zwischenteiles beschrieben.

Der Zwischenboden kann sich aus diesem Grund entweder im oberen Höhenbereich der vertikalen Erstreckung dieses unteren Zwischenteiles befinden, wenn diese Funktionsteile unterhalb des Zwischenbodens positioniert werden, oder gerade andersherum - und dies in bevorzugter Ausführungsform - im unteren Bereich der vertikalen Erstreckung, um über dem Zwischenboden Platz zur Anordnung solcher Funktionsteile wie einem Lüfter zu gewinnen, der ja zwecks Energieversorgung mit den elektrischen Baugruppen des Hauptraumes verbunden werden muß und zusätzlich Platz benötigt.

Durch Hinzufügen eines oder mehrerer der genannten Zusatzteile bzw. Zusatzmassnahmen zu den schon bisher bekannten Bauteilen kann aus diesem Bausatz je nach Einsatzzweck der individuell passende Verteilerschrank erstellt werden.

### c) Ausführungsbeispiele

Eine Ausführungsform gemäß der Erfindung ist im folgenden anhand der Figuren beispielhaft näher beschrieben. Es zeigen:
- Fig.1:: eine Explosionsdarstellung des erfindungsgemäßen Verteilerschrankes.
- Fig.2:: eine vertikale Schnittdarstellung durch den oberen Teil eines Verteilerschrankes,
- Fig. 3:: eine vertikale Schnittdarstellung durch die Funktionsöffnung des oberen Zwischenteiles und ein dort eingesetztes Funktionsteil
- Fig. 4:: ein an dieser Stelle eingesetztes anderes Funktionsteil,
- Fig. 5:: ein Vertikalschnitt durch den fertigen Verteilerschrank.
- Fig. 6:: Detaildarstellungen des oberen Zwischenteiles.
- Fig. 7:: das untere Zwischenteil,
- Fig. 8:: eine Aufsicht auf ein anderes oberes Zwischenteil.
- Figuren 9:: den aus Profilabschnitten bestehenden Montagerahmen und
- Fig. 10: eine Detaildarstellung des Querschnitts der Profilabschnitte.

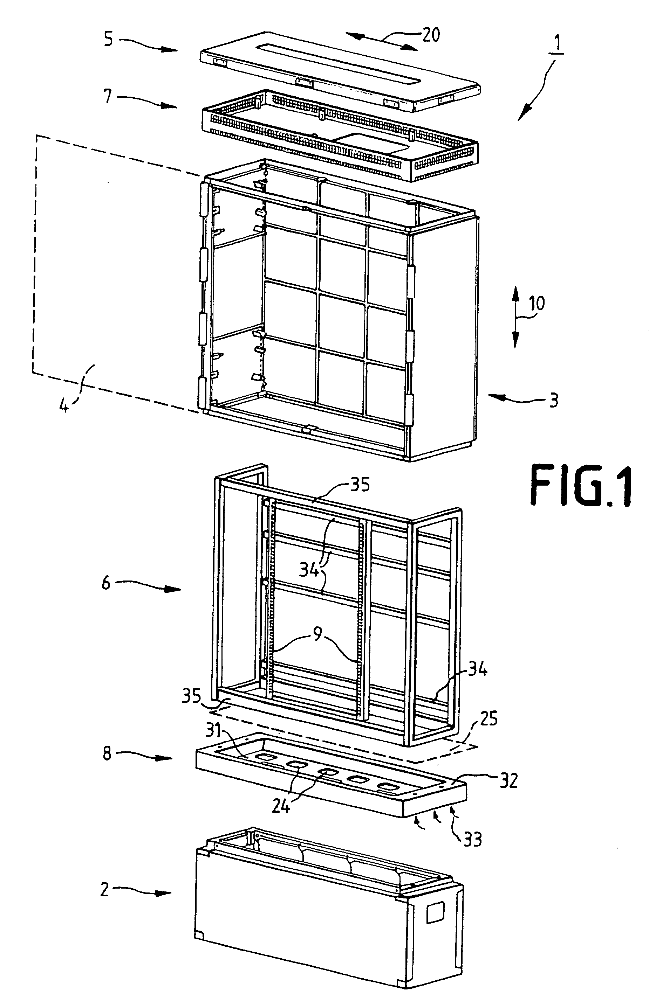

Figur 1 zeigt in Explosionsdarstellung, also in vertikaler Längsrichtung 10 des Verteilerschrankes auseinandergezogen, die einzelnen Bauteile, aus denen der Verteilerschrank - im unbestückten Zustand - besteht:

Der Sockelkasten 2 ist ein oben und unten offener Kasten mit Wänden entlang des gesamten Umfanges, der im montierten Zustand teilweise aus dem Erdboden herausragt, und durch welchen die in der Erde verlegten elektrischen Leitungen in den Verteilerschrank von unten hereingeführt werden. Seine Vorderseite lässt sich öffnen.

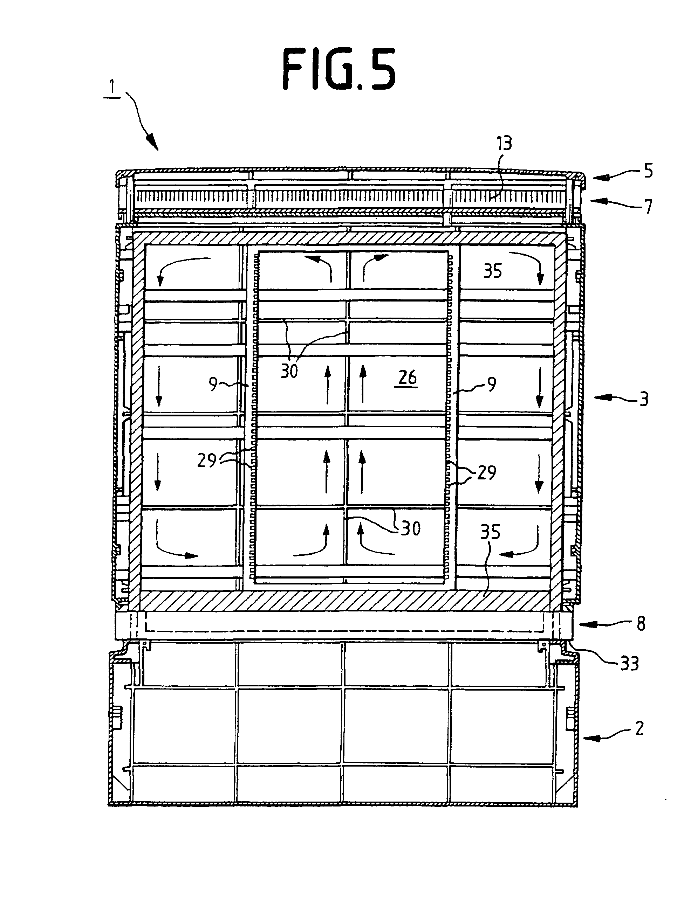

Dabei sind die im oberen Endbereich nach innen zurückversetzten Außenflächen der Seitenwände zu erkennen, wie insbesondere auch in Figur 5.

Durch Aufsetzen des aus Metallblech, insbesondere Aluminium, bestehenden unteren Zwischenteiles 8 auf den Sockelkasten 2 dessen Außenumfang gleich oder geringfügig größer wie der Sockelkasten 2 ist, entstehen zwischen den Unterkanten des außen umlaufenden Randes 32 des wannenförmigen unteren Zwischenteiles 8 und dem oberen Endbereich des Sockelkastens 2 nach unten weisende Eintrittsöffnungen 33. sofern dieses untere Zwischenteil 8 nicht über den gesamten Umfang, sondern nur abschnittsweise, beispielsweise nur in den Eckbereichen, auf dem oberen Rand des Sockelkastens 2 aufliegt.

Diese Eintrittsöffnungen für die Umgebungsluft in den Hauptraum 26 sind insbesondere notwendig, wenn an anderer Stelle Luft aus dem Hauptraum 26 abgesaugt wird. z.B. im oberen Bereich über ein obere Zwischenteil.

Zu diesem Zweck kann z. B. der Rand 32 des Zwischenteiles 8 im Querschnitt betrachtet etwa U-förmig mit nach unten weisender offener Seite gestaltet sein, dessen innerer vertikaler oder schräg vertikal verufender Schenkel dann auf zwei oder vier Seiten in den horizontalen Zwischenboden 31 übergeht.

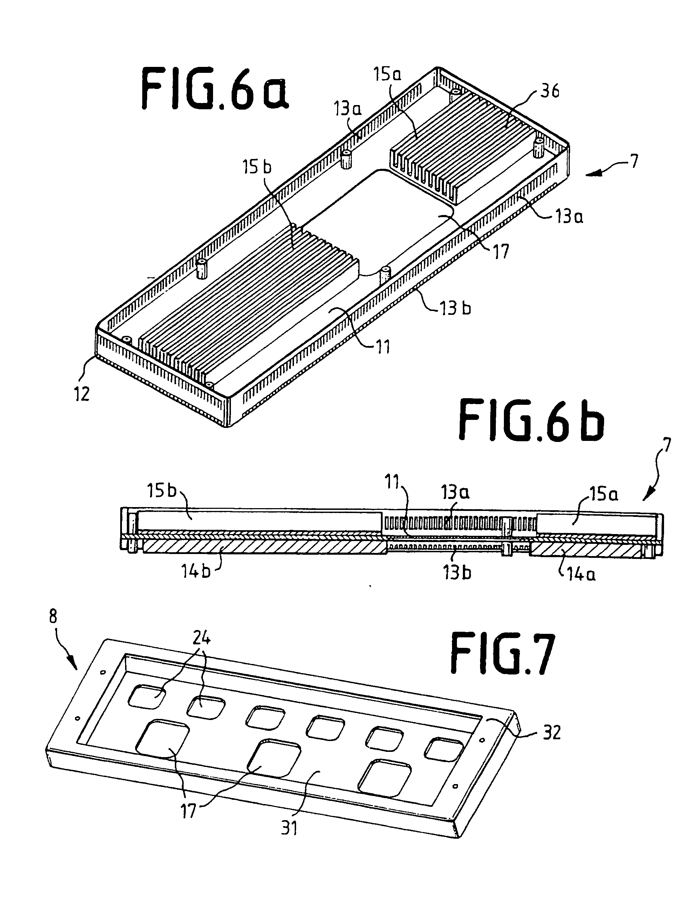

Im tiefliegenden Zwischenboden 31 des wannenförmigen Zwischenteiles 8 sind die in Querrichtung aufgereihten - siehe insbesondere Figur 7 - Kabeldurchgangsöffnungen 24 zu erkennen, die durch - nicht dargestellte - Verschlußdeckei EMVsicher und auch staubdicht verschließbar sind. In einer zweiten, parallelen Reihe sind drei Funktionsöffnungen 17 im Zwischenboden 31 angeordnet.

Auf dem unteren Zwischenteil 8 sitzt der Korpus 3, der an der Vorderseite durch eine oder zwei in Figur 1 nur angedeutete Türen 4 zu öffnen und zu schließen ist.

Der darunter dargestellte Montagerahmen 6 befindet sich im zusammengesetzten Zustand des Verteilerschrankes, wie im Schnitt in Figur 5 dargestellt, vollständig innerhalb des Korpus 3, und ist über das untere Zwischenteil 8 mit dem Sockelkasten 2 und mit dem Korpus 3 fest verbunden, vorzugsweise verschraubt, so wie dies im übrigen die bevorzugte Verbindungsart zwischen allen Bauteilen des Verteilerkastens ist.

Der Korpus 3 weist an den Seiten sowie an der Rückwand geschlossene plattenartige Wände auf, die auf der Innenseite durch Rippen 30 etc. versteift sind, wobei der Korpus 3 einstückig oder aus unterschiedlichen Teilen zusammengesetzt sein kann.

Die wenigstens eine Tür 4, die ebenso wie der Korpus 3 aus Kunststoff, nämlich als Spritzteil, insbesondere nach dem Thermoplast-Schaumspritzgiessverfahren hergestellt ist, ist über Scharniere am Korpus 3 angelenkt, und weist ein Schloß auf, um ein Öffnen durch nicht Berechtigte zu verhindern.

Der Korpus 3 ist an der Oberseite offen, und ebenso an der Unterseite, kann jedoch an der Unterseite durch eine Bodenplatte 25, die Aussparungen für einzelne hindurchzuführende Kabel aufweisen kann, wie in Figur 1 angedeutet weitestgehend verschlossen werden.

Die Bodenplatte 25 wird eingesetzt entweder anstelle des unteren Zwischenteiles 8, um vor allem eine Abdichtung gegenüber eindringendem Staub zu verhindern und auch um eine EMV-Abschirmung zu bieten, oder auch zusätzlich zum unteren Zwischenteil 8, wenn beispielsweise das untere Zwischenteil 8 aus Kunststoff besteht und keine EMV-Abschirmung darstellt.

In diesem Fall ist die Bodenplatte des Korpus 3 als EMV-Abschirmung ausgebildet.

Der Montagerahmen 6 befindet sich im Inneren des Korpus 3 und ist so dimensioniert, daß er dessen Innenraum weitestgehend ausfüllt. Der Montagerahmen 6 besteht aus einem Gitterwerk von Streben, die vorzugsweise entlang der Kanten der quaderförmigen Gesamtkontur des Montagerahmens 6 verlaufen.

Lediglich die in horizontaler Querrichtung 20 verlaufende hintere obere Querstrebe 34 ist nach unten versetzt und stellt eine von vier übereinanderliegenden Querstreben 34 an der Rückseite des Montagerahmens dar, die dem Anbringen von Stromversorgungseinrichtungen. Kabelabschlusseinrichtungen etc. dienen.

Die offenen Seitenflächen des Montagerahmens sind - außer entlang den Kanten - weder horizontal noch quer zusätzlich verstrebt. Gleiches gilt auch für die Vorderfront des Montagerahmens. Dort ist zusätzlich ein Baugruppenträger 9 in Form eines rechteckigen, zweidimensionalen, vertikalen Rahmens verschiebbar an den oberen und unteren Querstreben der Vorderseite des Montagerahmens 6 verschiebbar gelagert, um die Position z.B. entsprechend der Lage der benötigten Kabel verändern zu können.

An diesem Baugruppenträger 9 werden später - bei fertig erstelltem Verteilerschrank 1 und geöffneter Türe 4 - vom Monteur die elektrischen Baugruppen befestigt, indem die Vertikalstreben des Baugruppenträgers 9 einen genormten Abstand aufweisen und genormte Befestigungspunkte bzw. Lochreihen 29 zum Verschrauben der elektrischen Baugruppen aufweisen.

Weiterhin können im Inneren des Montagerahmens 6, also im Hauptraum des Verteilerschrankes 1, zusätzliche elektrische Einheiten wie beispielsweise eine Steuerung abhängig von der Innenraumtemperatur im Hauptraum für die Kühlung - sei es aktiv oder passiv, wie im folgenden noch beschrieben werden wird - angeordnet sein.

Auf der offenen Oberseite des Korpus 3 sitzt das obere Zwischenteil 7, welches - wie das untere Zwischenteil 8 - nur wenige Zentimeter hoch ist, so daß unteres und oberes Zwischenteil 7 und 8 zusammen die Gesamthöhe des Verteilerschrankes 1 gegenüber dem Zustand ohne diese Zwischenteile nur um insgesamt maximal 15 cm vergrößern.

Das obere Zwischenteil 7 sitzt dicht auf dem Korpus 3 auf, und wird selbst wiederum durch den auf das obere Zwischenteil 7 aufgesetzten Deckel des Verteilerschrankes 1 nach oben hin abgedeckt.

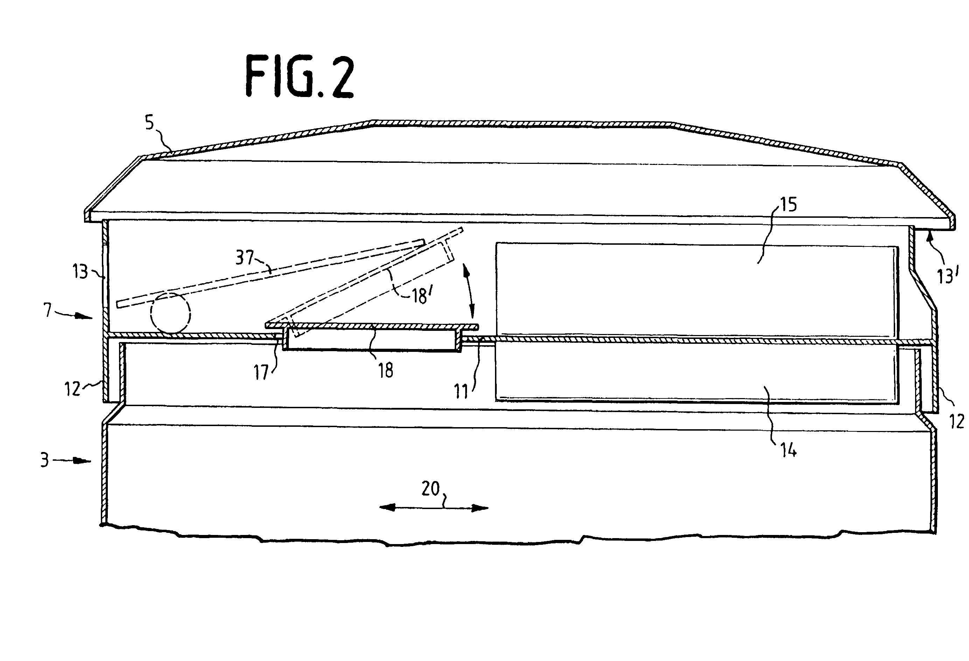

Der prinzipielle Aufbau des oberen Zwischenteiles 7 ist besser in der Figur 2 zu erkennen, welche in vertikaler Schnittdarstellung den oberen Bereich des Verteilerschrankes 1 zeigt.

Dabei ist zu erkennen, daß das obere Zwischenteil 7, welches wegen der Wärmeleitfähigkeit und der EMV-Abschirmung vorzugsweise aus Aluminium besteht, einen Zwischenboden 11 aufweist, der von einem umlaufenden Rand 12 umschlossen ist, wobei sich der Zwischenboden 11 dabei vorzugsweise eher im unteren Bereich der Höhe des im wesentlichen vertikal stehenden Randes 12 befindet. Auf der oberen Stirnfläche dieses oberen Zwischenteiles 7 ist der Deckel 5 aufgesetzt.

In Fig. 2 in der rechten Bildhälfte ist von dem Zwischenboden 11 sowohl nach oben abragend als auch nach unten abragend ein unterer bzw. oberer Kühlkörper 14 bzw. 15 zu erkennen, dessen Kühlrippen vorzugsweise jedoch quer zur Blickrichtung, also in Querrichtung 20 des Verteilerschrankes 1. verlaufen.

Dem liegt der Gedanke zugrunde, daß im Inneren des Hauptraumes 26, also des Korpus 3, eine ständige Luftzirkulation stattfindet, angetrieben durch die wärmeabgebenden dort montierten elektrischen Baugruppen, die vor allem im Baugruppenträger montiert sind.

An der Stelle, an welcher sich diese elektrischen Baugruppen befinden, wird die Luft erwärmt und steigt auf (siehe Figur 5), während sie in den davon entfernten Bereichen, vor allem den Randbereichen, des Hauptraumes entlang der Innenflächen der Wände des Korpus absinkt.

Unter dem oberen Ende des Hauptraumes, also unter dem auf dem Korpus 3 dicht aufsitzenden Zwischenboden 11 des oberen Zwischenteiles 7, strömt die Luft also im wesentlichen horizontal entlang, und dabei entlang der Kühlrippen 36 des unteren Kühlkörpers 14, der somit der Luft aus dem Hauptraum Wärme entzieht.

Zu diesem Zweck bestehen die Kühlkörper 14. 15 aus gut wärmeleitfähigem Material, insbesondere ebenfalls Aluminium. Durch flächige Anlage und Verbindung mit der Unterseite des Zwischenbodens 11 gibt der untere Kühlkörper 14 seine Wärme an den Zwischenboden 11 ab. Dadurch, daß an der gleichen Stelle darüber wiederum ein oberer Kühlkörper 15 montiert ist, gibt dieser obere Kühlkörper über seine große Oberfläche, insbesondere seine ebenfalls vorhandenen Kühlrippen 36 Wärme an diejenige Luft ab, die aus der Umgebung über die Schlitze 13 in das Innere des oberen Zwischenteiles 7 oberhalb des Zwischenbodens 11 ein- und an anderer Stelle dort über die analogen Schlitze 13 wieder austritt.

Dadurch wird eine Wärmeabfuhr ausschließlich über Wäeleitung vom Hauptraum 26 in den Bereich oberhalb des Zwischenbodens 11 erzielt, ohne daß eine offene Verbindung zwischen beiden existieren muss, die das Eindringen von Wasser oder Verschmutzungen in den Hauptraum ermöglicht.

Für den Luftein- und Luftaustritt können die Schlitze 13 entweder - wie in der linken Bildhälfte der Figur 2 dargestellt, im vertikal stehenden Rand 12 ausgebildet sein oder - wie in der rechten Hälfte der Figur 2 zu sehen, von oben und zur Seite hin abgedeckt dadurch entstehen, daß der Rand 12 des Zwischenteiles 7 wenigstens abschnittweise radial nach innen zurückversetzt ist, und somit der äußere Rand des darübersitzenden Deckels 5 weiter außen steht, und der Deckel 5 auch nicht über den gesamten Umfang, sondern ebenfalls nur abschnittsweise, und gerade nicht in den Bereichen des zurückversetzten Randes 12, auf dem Zwischenteil 7 aufsitzt und dort befestigt, insbesondere verschraubt ist.

Weiterhin ist in Fig. 2 eine Funktionsöffnung 17 im Bereich neben den Kühlkörpern 14 bzw. 15 im Zwischenboden 11 dargestellt, die in Figur 2 durch einen Funktionsdeckel 18 verschlossen ist, der sowohl Dichtigkeit gegen eindringendes Wasser und Verschmutzung bietet als auch die gleiche EMV-Abschirmung wie der Zwischenboden 11 selbst.

Dies ist vorgesehen, wenn für den jeweiligen Einsatzzweck bzw. Einsatzort des Verteilerschrankes die Wärmeabfuhr aus dem Hauptraum mittels der vorbeschriebenen Kühler 14 und/oder 15 ausreichend ist.

Sofern zusätzliche Maßnahmen, beispielsweise aktive Entlüftung des Hauptraumes 26 oder aktive Kühlung der Luft des Hauptraumes, notwendig ist, wird der Funktionsdeckel 18 entnommen und damit die Funktionsöffnung 17 offengelegt, um hier verschiedene Funktionsteile unterbringen zu können.

In Figur 2 ist mit gestrichelten Linien ein öffenbarer und schließbarer Funktionsdeckel 18' dargestellt, der beispielsweise an einer Seite der Funktionsöffnung 17 mittels eines Scharniers gehalten ist und mittels eines elektrisch betriebenen Antriebes 37, beispielsweise über Ritzel und Zahnstange, automatisch und sensorgesteuergeöffnet werden kann. Dadurch kann die erwärmte, sich unter dem Zwischenboden 11 ansammelnde, Luft aus dem Hauptraum nach oben aus diesem entweichen, wozu ein Nachströmen von kühler Luft, vorzugsweise über den Sockelkasten 2 und/oder die Eintrittsöffnungen 33 zwischen Sockelkasten 2 und unterem Zwischenteil 8 in den Funktionsraum 26 notwendig ist.

Um durch die geöffnete Funktionsöffnung 17 ein Austreten von elektromagnetischer Strahlung und/oder ein Eindringen von Feuchtigkeit oder anderen Verschmutzungen zu unterbinden, ist die Funktionsöffnung 17 mittels eines Staub- und Feuchtigkeitsfilters 22 und eines EMV-Filters 23, die jedoch beide luftdurchlässig sind, verschlossen.

Ein solcher kombinierter Luft/EMV-Filter 22/23 ist in der vergrößerten Detaildarstellung für die Funktionsöffnung 17 in Fig. 4 eingezeichnet, wobei dort zusätzlich ein elektrisch angetriebener Lüfter 21, also ein Lüfterrad, die Luft aus dem Hauptraum 26 nach oben absaugt.

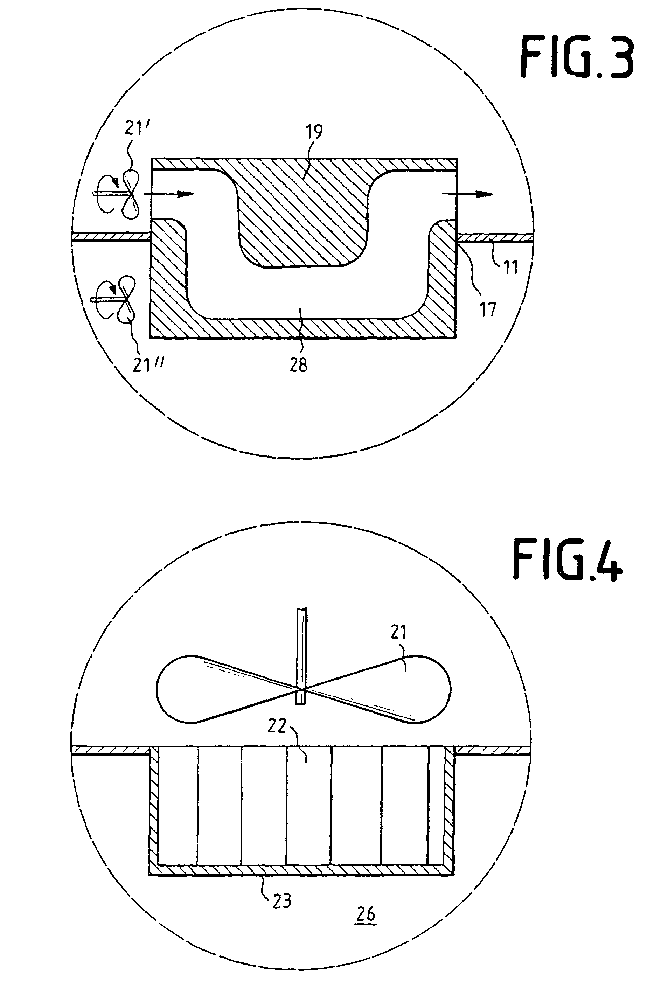

Fig. 3 zeigt eine weitere Möglichkeit, nämlich einen Wärmetauscher 19, der in der Funktionsöffnung 17 sitzt, und somit einerseits mit dem Hauptraum 26 als auch mit dem Raum oberhalb des Zwischenbodens 11 in Verbindung steht. Auch hier ist der Wärmetauscher 19 dicht in der Funktionsöffnung 17 angeordnet, so daß hier kein Luftaustausch zwischen Hauptraum 26 und dem Raum oberhalb des Zwischenbodens 11 möglich ist.

Der Wärmetauscher der Fig. 3 besitzt nur einen offenen Kreislauf, nämlich für die Luft oberhalb des Zwischenbodens 11, der durch Leitungen 28, vorzugsweise mit Hilfe eines Lüfters 21', von einer Seite zur anderen hindurchgedrückt wird. Die Leitungen 28, durch welche diese Luft hindurchbewegt wird, sind dabei insbesondere gekröpft und reichen bis in den Bereich unterhalb des Zwischenbodens 11 und damit bis in den Hauptraum 26 hinab. Sie können dort direkt von der Luft des Hauptraumes 26 bestrichen werden, entweder aktiv angetrieben über einen dort positionierten weiteren Lüfter 21", oder die Luftführung im Hauptraum 26 geschieht - mit oder ohne diesen Lüfter 21" im Hauptraum - wiederum durch - nicht dargestellte - Rohrleitungen, die mit den Rohrleitungen 28 des ersten Kreises wärmeleitend verbunden sind.

Anstelle des beschriebenen Luft/Luftwärmetauschers ist auch der Einsatz eines Luft/Wasser-Wärmetauschers möglich, bei dem anstelle der Luft oberhalb des Zwischenbodens 11 Wasser oder ein anderes flüssiges Kältemittel eingesetzt wird, weiches dann allerdings im Kreis umgepumpt werden muß und wiederum durch die entlangströmende Umgebungsluft, die in dem Bereich oberhalb des Zwischenbodens 11 in das obere Zwischenteil 7 eintritt, gekühlt wird.

Die Figuren 6a und b zeigen in perspektivischer Darstellung und im Querschnitt eine weitere Variante eines oberen Zwischenteiles 7. Dieses unterscheidet sich durch eine etwa mittige Funktionsöffnung 17 und diesbezüglich auf beiden Seiten angeordnete Kühlkörper, also je zwei obere und je zwei untere Kühlkörper 14 bzw. 15. Ferner sind entlang des Randes umlaufend nicht nur eine Reihe Schlitze 13 im Rand 12 vorhanden, sondern zwei Reihen 13a. b übereinander, von denen eine oberhalb und eine unterhalb des Zwischenbodens 11 liegt.

Dadurch ergeben sich zwei verschiedene Einsatzmöglichkeiten:

Je nach dem, ob der obere Rand der Wand des Korpus 3 innerhalb des Randes 12 des oberen Zwischenteiles 7 dicht an der Unterseite deren Zwischenboden 11 anliegend montiert wird oder nicht, belüften die Schlitze 13b dieser unteren Reihe den Hauptraum 26 direkt nach außen oder nicht.

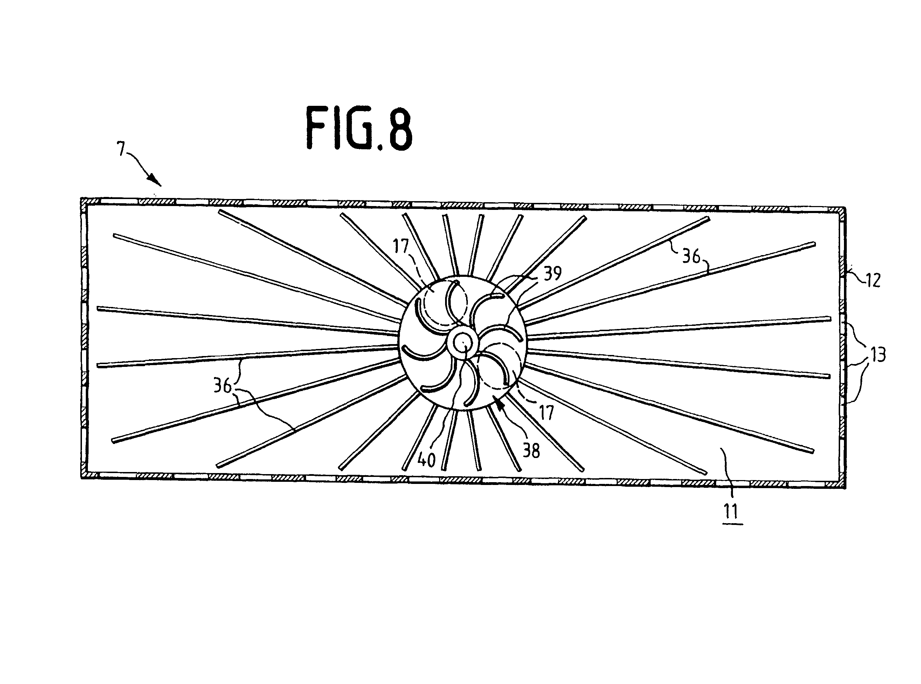

Fig. 8 zeigt eine Aufsicht auf ein oberes Zwischenteil 7 mit rechteckigem Grundriß, der von einem umlaufenden, nach oben aufragenden Seitenrand 12 umgeben ist, in dem sich - vorzugsweise vertikal stehende - Schlitze 13 befinden, die die Umgebungsluft eintreten lassen sollen, und einen möglichst hohen Flächenanteil - vorzugsweise mehr als 50% - bezogen auf die Gesamtfläche des Seitenrandes 12 aufweisen.

An einer Stelle - vorzugsweise im Zentrum - ist auf dem Zwischenboden 11, der die Zeichenebene der Fig. 8 bildet, ein Radial-Lüfterrad 38 drehbar um eine vertikal zum Zwischenboden 11 stehende Achse 40 angeordnet. Die Schaufeln 39 des Lüfterrades 38 sind dabei bogenförmig gekrümmt, um bei seitlicher Anströmung immer eine bevorzugte Drehrichtung zu bewirken, und auf der von der Anströmrichtung gegenüberliegenden Richtung die Luft radial nach außen zu drücken.

Radial um den Bereich des Lüfterrades herum und vorzugsweise möglichst nah an das Lüfterrad 38 heranreichend sind vom Zwischenboden 11 aufragende, radial sternförmig nach außen verlaufende Kühlrippen 36 angeordnet, die somit einerseits von der das Lüfterrad anströmenden Außenluft und andererseits auf der gegenüberliegenden Seite von der durch das Lüfterrad 38 radial nach außen gedrückten Luft gestrichen werden, wodurch die Kühlung der Kühlrippen 36 gefördert wird.

Eine gleiche oder analoge Ausbildung - also radiale Anordnung der Kühlrippen und drehbar gelagertes Lüfterrad - kann sich auf der in Fig. 8 nicht sichtbaren Unterseite des Zwischenbodens 11 befinden, wobei in beiden Fällen bevorzugt die Lüfterräder nicht angetrieben, also passiv sind, und nur durch die anströmende Luft - unterhalb des Zwischenbodens dann durch dort auftretende Zirkulation im Inneren des Korpus - angetrieben werden.

Dabei können zusätzlich das oberhalb und das unterhalb des Zwischenbodens 11 liegende Lüfterrad über eine gemeinsame Welle drehfest miteinander verbunden werden, wodurch das oberhalb des Zwischenbodens liegende, von der Außenluft angetriebene Lüfterrad 38 trotz dichtem Zwischenboden 11 die Zirkulation im Bereich unterhalb des Zwischenbodens 11, also im dichten Teil des Korpus, fördert.

Ebenso können - vorzugsweise im Bereich des Lüfterrades 38 - eine oder mehrere Funktionsöffnungen 17, beispielsweise als sternförmig um die Achse des Lüfterrades herum angeordnete kreisförmige Öffnungen, angeordnet sein, um eine Durchtrittsöffnung für Luft von dem Bereich unterhalb des Zwischenbodens 11 in den Bereich darüber zu schaffen. In diesem Fall ist das Lüfterrad als kombiniertes Axial-Radial-Lüfterrad ausgebildet, um die unterhalb des Zwischenpults 11 befindliche warme Luft in Achsrichtung des Lüfterrades hochzusaugen.

Die Funktionsöffnungen 17 können dabei wie vorbeschrieben durch EMV-Filter, Staubfilter etc. abgedichtet sein und auch durch öffenbare Deckel, in diesem Fall auf der Unterseite der Funktionsöffnungen 17, verschließbar sein, falls sich nur ein Lüfterad auf der Oberseite des Zwischenbodens 11 befindet.

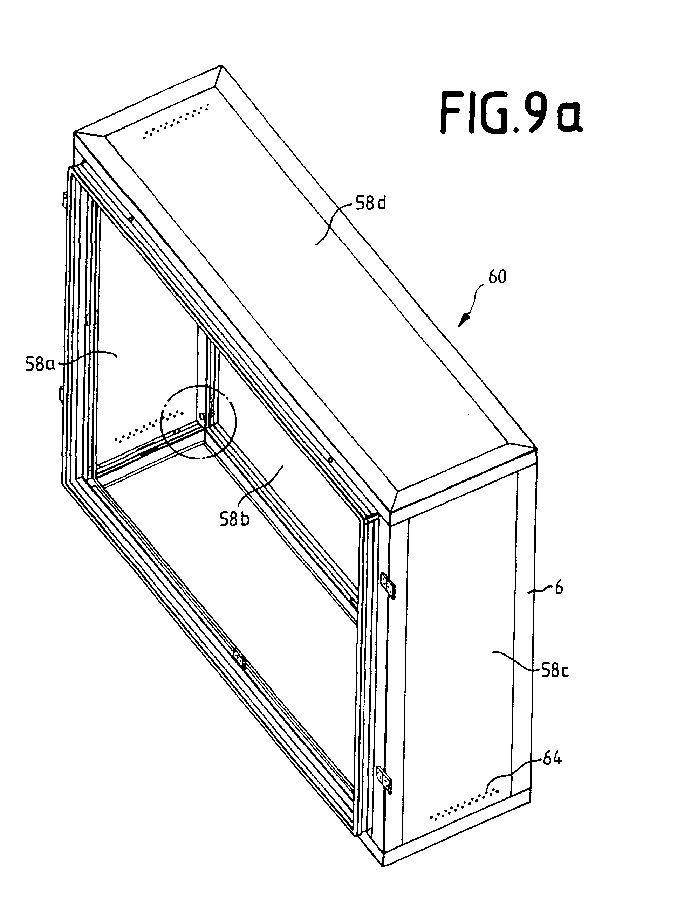

Figur 9a zeigt den zu einem inneren Gehäuse komplettierten Montagerahmen 6, der mit Hilfe von dort eingesteckten Einsteckplatten 58a,b,c.. auf allen Seiten bis auf die Frontseite (Türseite) und Unterseite (Kabelzuführung) offen ist. In den Einsteckplatten der Seitenteile sind Lochungen 64 erkennbar, die dem Abführen von warmer Luft auf die Außenseite der Einsteckplatten (58) und Abtransport durch die dort entlangströmende Luft nach oben außen dienen.

Im fertig montierten Zustand ist das innere Gehäuse wie in Fig. 9a dargestellt von einem äußeren Korpus 3 im Abstand umgeben.

Die die Frontseite verschließenden, in Fig. 9a nicht dargestellten. Türen können in sich ebenfalls doppelwandig ausgebildet sein.

Sofern die Einsteckplatten 58a.b,c.. dagegen der EMV-Abschirmung oder auch der EMV-Abschirmung dienen, wird - abhängig von den einzuhaltenden Grenzwerten - eine Lochung 64 nicht zulässig sein, da dann genau durch diese Lochung elektromagnetische Strahlung aus dem Innengehäuse austreten könnte. Da der äußere Korpus 3 vorzugsweise aus Kunststoff besteht, bietet dieser keine weitere Abschirmung für die EMV-Strahlung.

Im fertig montierten Zustand ist weiterhin die Unterseite des Montagerahmens 6 durch eine in Fig. 1 angedeutete Bodenplatte 25 soweit verschlossen, dass dort nur enge Durchlässe für die von unten her einzuführenden Erdkabel vorhanden sind, ansonsten jedoch eine EMV-Abschirmung gegeben ist.

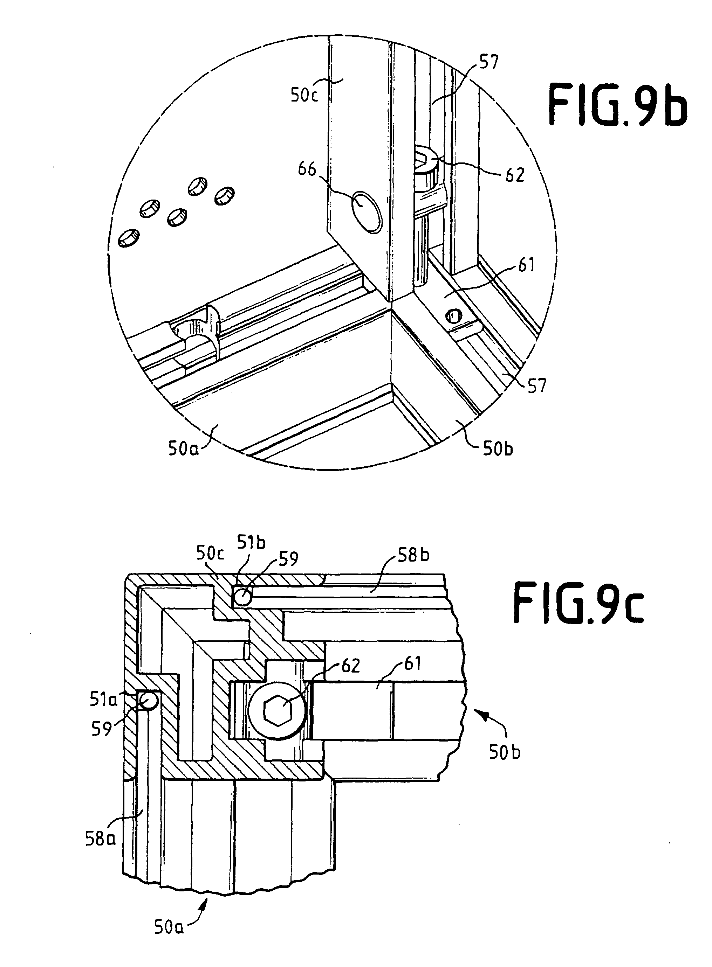

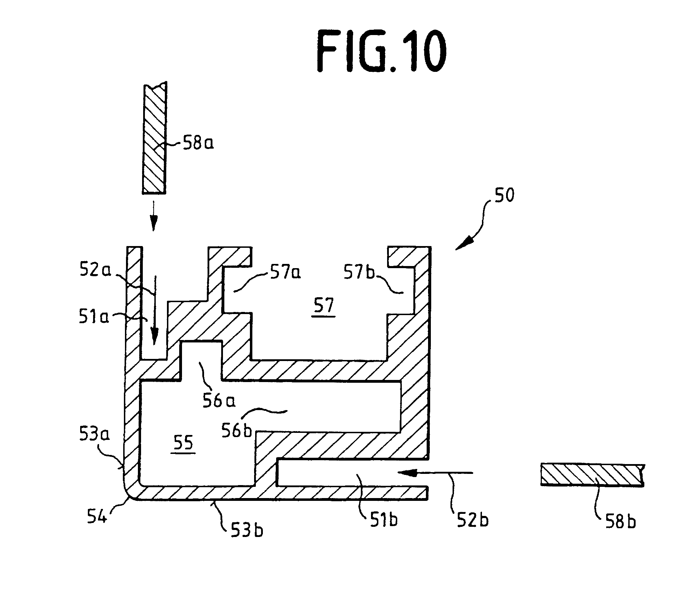

Fig. 9 und 10 zeigt in einem Horizontalschnitt bzw. einer perspektivischen Darstellung die aus drei Profilabschnitten 50a.b.c erstellte Eckverbindung. Der auch in Fig. 9c ersichtliche Querschnitt des Profiles ist besser in Fig. 10 zu erkennen: die Querschnittsform des Profiles ist rechteckig, fast quadratisch, wobei das Profil zwei durchgängig geschlossene aneinander angrenzende Außenflächen 53a. 53b aufweist. Auf der Innenseite dieser beiden Außenflächen sind Einstecktaschen 51a.b angeordnet zum Einstecken von entsprechend dimensionierten Einsteckplatten 58a,b, wie besser in Fig. 9c ersichtlich.

Die Einsteckrichtung dieser Einstecktaschen ist parallel zu den geschlossenen Außenflächen 53a.b und dementsprechend sind diese Einsteckrichtungen 52a,b ebenfalls im rechten Winkel zueinander.

Zusätzlich ist auf einer der nicht geschlossenen Außenseiten eine weitere Tasche 57, also mit einer Einsteckrichtung parallel zur Einsteckrichtung 52a der einen Einstecktasche 51 a. angeordnet. Diese zusätzliche Tasche 57 weist in ihren Flanken symmetrisch vorhandene Hinterschneidungen 57a.b auf, die dem Einlegen und Verspannen einer üblichen Nutmutter 65 dient, wie beispielhaft in Fig. 9b dargestellt.

Der innerhalb des Profilquerschnitts noch verbleibende Freiraum zwischen den Außenflächen 53a.b und deren Wandungen sowie den Taschen 51a,b und 57 bildet im Eckbereich eine im Querschnitt allseits geschlossene und damit sehr verwindungssteife Hohlkammer 55, die zusätzliche Ausbuchtungen 56a,b aufweist, was die Steifigkeit zusätzlich erhöht. Dabei ragt die eine Ausbuchtung 56b zwischen das innere Ende der Tasche 57 und die Seite der einen Einstecktasche 51b.

Die perspektivische Darstellung der Fig. 9b zeigt die Erstellung einer Eckverbindung:

Zunächst werden zwei Profilabschnitte 50a,b auf Gehrung geschnitten und mit diesen Gehrungen aneinandergelegt und verbunden. Die Gehrung wird dabei so angeordnet, dass die Öffnung der Tasche 57 mit den Hinterschneidungen 57a,b in der durch die beiden winklig aneinander gelegten Profile 50a.b definierten Ebene liegt.

Die Verbindung erfolgt durch einen Winkel, der in die Hinterschneidungen 57a,b passt und mit seinen freien Enden in die freien Enden der auf Gehrung geschnittenen Hinterschneidungen 57a.b eingeschoben wird, wie an sich bekannt. Der Winkel wird jedoch im Gegensatz zu den bekannten Lösungen nicht unbedingt separat mittels Spannschrauben gegen den Nutengrund der Tasche 57 verspannt, sondern weist genau auf seiner Winkelhalbierenden, also in der Ecke, eine Gewindebohrung 63 auf.

Der Winkel kann jedoch auch auf der in Fig. 9b nicht sichtbaren Außenseite der auf Gehrung aneinandergelegten beiden Profilabschnitte befestigt sein. In diesem Fall wird in den durch die Gehrung gebildeten Eckbereich der Hinterschneidungen 57a.b eine Nutmutter 61 eingelegt.

Dadurch ist es möglich, auf die Hauptebene, von der offenen Seite der Taschen 57 her, im rechten Winkel zu dieser Hauptebene der beiden ersten Profilabschnitte 50a.b stumpf einen dritten Profilabschnitt 50c aufzusetzen, so dass die Aussenflächen 53a,b aller drei Profilabschnitte eine rechtwinklige dreidimensionale Aussenecke bilden. Die Tasche 57 des dritten Abschnittes 50c fluchtet dabei mit der Tasche 57 einer der beiden anderen Profilabschnitte 50a bzw. 50b. Zusätzlich verläuft in dieser Tasche 57 innerhalb des Profiles 50c und in dessen Längsrichtung eine Spannschraube 62, die mit ihrem Gewinde in die Gewindebohrung 63 des Winkels oder der Nutmutter 61 eingeschraubt wird. Gegenüber dem Profil 50c ist die Spannschraube formschlüssig mittels eines Querbolzens 66 gesichert, der quer zum Verlauf des Profiles in eine entsprechende Bohrung eingesteckt ist und den die Spannschraube 62 durchdringt.

Durch Festziehen der Spannschraube wird somit nicht nur das dritte Profil 50c gegenüber den beiden anderen Profilen 50a.b verspannt, sondern auch der Winkel oder die Nutmutter 61 gegen die Hinterschneidungen 57a.b in den Taschen 57 der ersten beiden Profile 50a.b.

Eine komplette Eckverbindung wird damit nur mittels einer einzigen Spannschraube 62 realisiert.

Die Querbohrungen für den Querbolzen 66 können dabei vorzugsweise in allen Profilen 50a,b,c bereits vorgefertigt vorhanden sein, wie am Profil 50a ersichtlich.

Fig. 9c zeigt zusätzlich, dass beim Einlegen von Einsteckplatten 58a,b in die hierfür vorgesehenen Einstecktaschen 51a.b zwischen Platten und Nutengrund eine EMV-Dichtung 59 vorgesehen wird.

Dies zeigt, dass mit Hilfe des speziell gestalteten Profiles, aus welchem der Montagerahmen gebildet wird, sowohl ein gut belüftbares doppelwandiges Gehäuse als auch bzw. stattdessen ein Gehäuse mit innenliegender EMV-Abschirmung sehr leicht wahlweise erstellt werden kann.

Vorzugsweise werden die Einsteckplatten aus Aluminium bestehen, was einerseits EMV-Dichtigkeit und andererseits gute Leitfähigkeit für die im Innenraum auftretenden Wärmeentwicklungen geeignet ist.

Das in den Fig. 9 und 10 nicht sichtbare äußere Gehäuse (Korpus 3) kann in sich stabil aufgebaut oder hinsichtlich seiner Einzelteile (Rückwand. Seitenwände, Türen etc.) jeweils separat, jedoch im Abstand, an dem Montagerahmen 6 befestigt sein mittels Abstandshaltern. Befestigungslaschen, Scharnieren oder ähnlicher bekannter Bauteile. Selbst die Gestaltung des äußeren Korpus aus Blech ist möglich, sofern ein Kunde dies ausdrücklich wünscht, trotz der nachteiligen technischen und thermischen Wirkungen.

### BEZUGSZEICHENLISTE

- 1: Verteilerschrank
- 2: Sockelkasten
- 3: Korpus
- 4: Tür
- 5: Deckel
- 6: Montagerahmen
- 7: oberes Zwischenteil
- 8: unteres Zwischenteil
- 9: Baugruppenträger
- 10: vertikale Längsrichtung
- 11: Zwischenboden
- 12: Rand
- 13: Schlitze
- 14: unterer Kühlkörper
- 15: oberer Kühlkörper
- 16: Kühlrippen
- 17: Funktionsöffnung
- 18: Funktionsdeckel
- 19: Wärmetauscher
- 20: Querrichtung
- 21: Lüfter
- 22: Luftfilter
- 23: EMV-Filter
- 24: Kabeldurchgangsöffnung
- 25: Bodenplatte
- 26: Hauptraum
- 27: Funktionsöffnung
- 28: Leitungen
- 29: Lochreihe
- 30: Rippe
- 31: Zwischenboden
- 32: Rand
- 33: Eintrittsöffnungen
- 34: Querstreben
- 35: Querstreben
- 36: Kühlrippen
- 37: Antrieb
- 38: Löffelrad
- 39: Schaufel
- 40: Achse
- 50: Profil-Abschnitte
- 51a,b: Einstecktaschen
- 52a,b: Einsteckrichtungen
- 53a.b: Aussenfläche
- 54: Aussenecke
- 55: Hohlkammer
- 56a,b: Ausbuchtung
- 57: Tasche
- 57a,b: Hinterschneidungen
- 58a.b: Einsteck-Platte
- 59: EMV-Dichtung
- 60: Innenkorpus
- 61: Nutmutter
- 62: Spannschraube
- 63: Gewindebohrung
- 64: Ladung
- 66: Querbolzen

## Patentansprüche

1. Verteilerschrank (1) für die Aufnahme von Schwachstrom-Verteilanlagen, insbesondere zur Anordnung im Freien, mit
- einem Sockelkasten (2),
- einem äußeren Schrankkorpus (3) mit wenigstens einer Tür (4),
- einem Schrankdeckel (5) und
- einem inneren Montagerahmen 6),
**dadurch gekennzeichnet, daß**
der Montagerahmen (6) aus Profilabschnitten (50) zusammengesetzt ist, deren Querschnittsformen zwei Einstecktaschen (51a,b) aufweisen, deren Einsteckrichtungen (52a,b) im rechten Winkel zueinander verlaufen.

2. Verteilerschrank nach Anspruch 1
**dadurch gekennzeichnet, daß**
die parallel zu den Einsteckrichtungen (52a,b) verlaufenden Außenflächen (53a,b) des Profiles (50) eben und geschlossen sind und im Außeneck (54) ineinander übergehen.

3. Verteilerschrank nach einem der vorhergehenden Ansprüche,
**dadurch gekennzeichnet, daß**
das Profil (50) auf der Innenseite der Außenecke (54) eine im Querschnitt betrachtet geschlossene Hohlkammer (55) aufweist, welche wenigstens eine nutartige Ausbuchtung (56a,b) aufweist.

4. Verteilerschrank nach einem der vorhergehenden Ansprüche,
**dadurch gekennzeichnet, daß**
das Profil auf einer von den Außenflächen (53a,b) abgewandten Außenfläche eine offene weitere Tasche (57) in Form einer hinterschnittenen Nut aufweist, deren Einsteckrichtung insbesondere parallel zu einer der Einstecktaschen (z. B. 51a), ist, und insbesondere die Hinterschneidungen (57a.b) beidseits, insbesondere mittensymmetrisch, in den Flanken der Tasche (57) angeordnet sind.

5. Verteilerschrank nach einem der vorhergehenden Ansprüche,
**dadurch gekennzeichnet, daß**
in den Einstecktaschen (51a,b) der zum Montagerahmen (6) zusammengebauten Profilabschnitte (50) entsprechend dimensionierte Einsteckplatten (58) stecken, so dass der damit komplettierte Montagerahmen (6) einen bis auf die Türseite weitestgehend geschlossenen Innenkorpus (60) bildet.

6. Verteilerschrank nach einem der vorhergehenden Ansprüche,
**dadurch gekennzeichnet, daß**
die Einsteckplatten (58a,b) aus EMV-abschirmendem Material, insbesondere Stahlblech oder Alu-Blech, bestehen und insbesondere zwischen den Einsteckplatten (58a,b) und dem Grunde der Einstecktaschen (51a,b) jeweils eine EMV-Dichtung (59) angeordnet ist.

7. Verteilerschrank nach einem der vorhergehenden Ansprüche,
**dadurch gekennzeichnet, daß**
bei einer dreidimensionalen Eckverbindung von drei Profilabschnitten (50a,b,c) zwei Profilabschnitte (50a,b) auf Gehrung geschnitten und aneinandergelegt sowie mittels eines in die Hinterschneidungen (57a,b) eingelegten und dort verklemmten Winkels oder einer Nutmutter (61) verbunden werden und der dritte Profilabschnitt (50c) stumpf auf diese Eckverbindung aufgesetzt wird sowie mittels einer Spannschraube (62) damit verschraubt wird, wobei die Spannschraube (62) in eine im Eck des Winkels oder der Nutmutter (61) eingearbeitete Gewindebohrung (63) eingeschraubt wird.

8. Verteilerschrank nach einem der vorhergehenden Ansprüche,
**dadurch gekennzeichnet, daß**
zwischen dem Innenkorpus (60) und dem äußeren Schrankkorpus (3) ein Luftraum verbleibt, der im oberen und unteren Bereich offen, insbesondere zur Umgebung hin offen, ist und einem Aufsteigen von Luft und damit Wärmeabfuhr von der Innenseite des äußeren Schrankkorpus (3) dient.

9. Verteilerschrank nach einem der vorhergehenden Ansprüche,
**dadurch gekennzeichnet, daß**
der Verteilerschrank (1) ein oberes Zwischenteil (7) aufweist, welches zwischen dem oberen Rand des Korpus (3) und dem Deckel (5) angeordnet ist und insbesondere wenigstens der Korpus und/oder der Sockelkasten (2) und/oder der Deckel (5) und/oder die wenigstens eine Tür (4) aus Kunststoff bestehen und insbesondere als Kunststoffspritzteil hergestellt sind.

10. Verteilerschrank nach Anspruch 9.
**dadurch gekennzeichnet, daß**
im Inneren des Korpus (3) der Montagerahmen (6) zur Aufnahme elektrischer Baugruppen angeordnet ist, und insbesondere der Montagerahmen (6) in Querrichtung betrachtet keine Hinterschneidungen mit dem Korpus (3) aufweist, so daß ein Abheben des Korpus (3) nach oben möglich ist trotz Verbleibens des Montagerahmens (6) mit allen daran befestigten Bauteilen auf dem Sockelkasten (2).

11. Verteilerschrank nach Anspruch 9 oder 10.
**dadurch gekennzeichnet, daß**
entlang des Montagerahmens (6) horizontal verschiebbar ein rahmenförmiger Baugruppenträger (9) zum Befestigen der elektrischen Baugruppen angeordnet ist.

12. Bausatz zum Erstellen eines Verteilerschrankes, welcher der Aufnahme von Schwachstrom-Verteilanlagen dient und insbesondere im Freien aufgestellt werden soll, mit
- einem Sockelkasten (2),
- einem äußeren Schrankkorpus (3) mit wenigstens einer Tür (4),
- einem Schrankdeckel (5), insbesondere aus Kunststoff, insbesondere Polycarbonat und
- einem Montagerahmen (6) zur Anordnung innerhalb des äußeren Schrankkorpus (3),
**dadurch gekennzeichnet, daß**
- der Montagerahmen (6) aus Profilabschnitten (50) zusammensetzbar ist, die jeweils wenigstens zwei Einstecktaschen (51a,b), welche im Winkel voneinander abstreben, aufweisen und
- wenigstens einer Einsteckplatte (58a,b), zum Einstecken in die Einstecktaschen (51 a,b) der Profilabschnitte (50).

13. Bausatz nach Anspruch 12.
**dadurch gekennzeichnet, daß**
die Einsteckplatte (58a,b) so dimensioniert ist, dass sie zusammen mit dem Montagerahmen (6) wenigstens eine in sich geschlossene Außenfläche als inneres Gehäuse bildet.

14. Bausatz nach Anspruch 12 oder 13,
**dadurch gekennzeichnet, daß**
der Bausatz wenigstens ein Zusatzteil umfaßt, welches an dem Korpus (3) anordenbar ist, und insbesondere das Zusatzteil ein oberes Zwischenteil (7) ist, welches zwischen dem oberen Rand des Korpus (3) und dem Deckel (5) anordenbar ist.

15. Bausatz bzw. Verteilerschrank nach einem der vorhergehenden Ansprüche,
**dadurch gekennzeichnet, daß**
das Profil (50) einen in Längsrichtung gleichbleibenden Querschnitt aufweist.

16. Verteilerschrank bzw. Bausatz nach einem der vorhergehenden Ansprüche,
**dadurch gekennzeichnet, daß**
das Zusatzteil ein im Inneren des Korpus (3) angeordneter Montagerahmen (6) zur Aufnahme elektrischer Baugruppen ist, und insbesondere der Montagerahmen (6) in Querrichtung betrachtet keine Hinterschneidungen mit dem Korpus (3) aufweist, so daß ein Abheben des Korpus (3) nach oben möglich ist trotz Verbleibens des Montagerahmens (6) mit allen daran befestigten Bauteilen auf dem Sockelkasten (2).

17. Verteilerschrank bzw. Bausatz nach einem der vorhergehenden Ansprüche,
**dadurch gekennzeichnet, daß**
der Verteilerschank (1) ein unteres Zwischenteil (8) aufweist, weiches zwischen dem unteren Rand des Montagerahmens (6) und dem oberen Rand des Sockelkastens (2) angeordnet ist, und insbesondere das obere Zwischenteil (7) und/oder das untere Zwischenteil (8) aus einem die elektromagnetische Strahlung zurückhaltendem Material, insbesondere aus Aluminium, bestehen.

18. Verteilerschrank bzw. Bausatz nach einem der vorhergehenden Ansprüche,
**dadurch gekennzeichnet, daß**
das obere Zwischenteil (7) wenigstens einen Zwischenboden (11) sowie einen seitlich umlaufenden insbesondere vertikal stehenden Rand (12) aufweist, und bei angesetztem Deckel (5) sowie Korpus (3) Öffnungen, insbesondere Schlitze (13), zum Ein- und Ausströmen der Umgebungsluft, insbesondere im Rand (12) oberhalb des Zwischenbodens (11), aufweist.

19. Verteilerschrank bzw. Bausatz nach einem der vorhergehenden Ansprüche,
**dadurch gekennzeichnet, daß**
an dem Zwischenboden (11) in inniger Anlage an diesem wenigstens ein nach unten, in Richtung auf den Korpus (3) hin abragender, unterer Kühlkörper (14) mit einer großen Oberfläche, insbesondere mit Kühlrippen (16) aus einem Material mit guter Wärmeleitfähigkeit, insbesondere aus Aluminium, angeordnet ist, und insbesondere an der gleichen Stelle wie der untere Kühlkörper (14) jedoch auf der Oberseite des Zwischenbodens (11) ein oberer Kühlkörper (15) in inniger Anlage an den Zwischenboden angeordnet ist, der aus einem Material mit guter Leitfähigkeit, insbesondere Aluminium, besteht und eine große Oberfläche aufweist, insbesondere Kühlrippen aufweist, und insbesondere mit dem unteren Kühlkörper (14) identisch ist, und insbesondere die Kühlrippen (16) des oberen und/oder unteren Kühlkörpers (15) bzw. (14) in horizontaler Querrichtung (20) des Verteilerschrankes (1) verlaufen.

20. Verteilerschrank bzw. Bausatz nach einem der vorhergehenden Ansprüche,
**dadurch gekennzeichnet, daß**
die Kühlrippen (16) des oberen und/oder unteren Kühlkörpers (15) bzw. (14) in der Aufsicht betrachtet radial verlaufen und im Mittenbereich, insbesondere zentrisch zum geometrischen Treffpunkt der Kühlrippen (16), ein Lüfterrad (38), insbesondere ein Radial-Lüfterrad mit insbesondere in der Aufsicht gebogenen Schaufeln (39) um eine insbesondere vertikal stehende Achse (40) drehbar gelagert angeordnet ist, und insbesondere sich die Kühlkörper (14) bzw. (15) über mehr als die Hälfte der Grundrißfläche des oberen Zwischenteiles (7) erstrecken.

21. Verteilerschrank bzw. Bausatz nach einem der vorhergehenden Ansprüche,
**dadurch gekennzeichnet, daß**
die Schlitze (13) am Übergang zwischen dem oberen Zwischenteil (7) und dem Deckel (5) durch Aufsetzen des Deckels so entstehen, indem in diesem Bereich der Rand (12) gegenüber dem darauf aufsitzenden Deckel (5) abschnittsweise nach innen rückversetzt ist, und die **dadurch** entstehenden Schlitze (13') in horizontaler Richtung vom Deckel (5) überlappt werden.

22. Verteilerschrank bzw. Bausatz nach einem der vorhergehenden Ansprüche,
**dadurch gekennzeichnet, daß**
im Zwischenboden (11) eine Funktionsöffnung (17) angeordnet ist, zum Einsetzen einer Vielzahl von Funktionsteilen, beispielsweise automatisch schließbarer Funktionsdeckel (18), Wärmetauscher (19), Lüfter (21), mit Luftfilter (22) und EMV-Filter (23), und insbesondere der Zwischenboden (31) mehrere Kabeldurchgangsöffnungen verteilt über seine Fläche aufweist.

23. Verteilerschrank bzw. Bausatz nach einem der vorhergehenden Ansprüche,
**dadurch gekennzeichnet, daß**
das untere Zwischenteil (8) wannenförmig ausgebildet ist und einen Zwischenboden (31), einen umlaufenden Rand (32) und insbesondere Luftaustrittsöffnungen (33) aufweist, und insbesondere der Zwischenboden (31) des unteren Zwischenteiles (8) eine Funktionsöffnung (27) zum darin Befestigen einer Vielzahl von Funktionselementen aufweist, und insbesondere der Zwischenboden (31) im unteren Höhenbereich des Randes (32) angeordnet ist.

24. Verteilerschrank bzw. Bausatz nach einem der vorhergehenden Ansprüche,
**dadurch gekennzeichnet, daß**
die Austrittsöffungen (33) in dem nach unten offenen Rand (32) entstehen durch Aufsetzen des unteren Zwischenteiles (8) auf den Sockelkasten (2), indem der obere Rand des Sockelkastens (2) wenigstens teilweise radial nach innen zurückversetzt ist gegenüber dem unteren Rand des unteren Zwischenteiles (8).

25. Verteilerschrank bzw. Bausatz nach einem der vorhergehenden Ansprüche,
**dadurch gekennzeichnet, daß**
der Verteilerschrank (1) eine EMV-Abschirmung, betreffend den Hauptraum im Inneren des Korpus (3), aufweist, und insbesondere die EMV-Abschirmung im Korpus (3) vorhanden ist oder an den Innenflächen des Korpus (3) oder an den Außenflächen des Montagerahmens (6) und zusätzlich die oberen und unteren Horizontalflächen des Korpus (3) abgeschirmt sind, und insbesondere die obere horizontale Abschirmung durch das obere Zwischenteil (7) bewirkt wird und/oder die untere horizontale Abschirmung durch das untere Zwischenteil (8) bewirkt wird, und insbesondere die untere horizontale EMV-Abschirmung durch eine Bodenplatte (25) aus einem elektromagnetische Strahlung abschirmendem Material bewirkt wird, welche insbesondere am Korpus (3) befestigt ist, und insbesondere die EMV-Abschirmung aus einer Materialbeimischung in den Kunststoff des Korpus, aus einer Beschichtung der Innenflächen des Korpus oder aus einem Gewebe oder aus Blechen, insbesondere Lochblechen, die insbesondere auf den Außenseiten des Montagerahmens (6) und/oder den Innenseiten des Korpus (3) bzw. der Tür (4) montiert sind, besteht und dabei jeweils elektromagnetische Strahlung zurückhaltende Materialien, insbesondere Metalle, verwendet werden.

## Claims

1. Distribution cabinet (1) for accommodating weak-current distribution installations, in particular for arranging outdoors, having
- a base box (2),
- an outer cabinet body (3) with at least one door (4),
- a cabinet cover (5), and
- an inner installation frame (6),
**characterized in that** the installation frame (6) is made up of profile sections (50), of which the cross-sectional shapes have two insertion pockets (51a,b), of which the insertion directions (52a,b) run at right angles to one another.

2. Distribution cabinet according to Claim 1, **characterized in that** outer surfaces (53a,b) of the profile (50), said outer surfaces running parallel to the insertion directions (52a,b), are planar and continuous and merge one into the other in the external corner (54).

3. Distribution cabinet according to one of the preceding claims, **characterized in that**, on the inside of the external corner (54), the profile (50) has a hollow chamber (55) which is continuous, as seen in cross section, and has at least one groove-like recess (56a,b).

4. Distribution cabinet according to one of the preceding claims, **characterized in that**, on an outer surface which is directed away from the outer surfaces (53a,b), the profile has a further open pocket (57) in the form of an undercut groove, of which the insertion direction is, in particular, parallel to one of the insertion pockets (e.g. 51a), and in particular the undercuts (57a,b) are arranged on both sides, in particular in a centrally symmetrical manner, in the flanks of the pocket (57).

5. Distribution cabinet according to one of the preceding claims, **characterized in that** correspondingly dimensioned insertion panels (58) are inserted in the insertion pockets (51a,b) of the profile sections (50), which are assembled to form the installation frame (6), with the result that the installation frame (6) completed therewith forms an inner body (60) which, to the greatest extent, is closed apart from the door side.

6. Distribution cabinet according to one of the preceding claims, **characterized in that** the insertion panels (58a,b) consist of EMC-shielding material, in particular sheet steel or sheet aluminium, and in each case one EMC seal (59) is arranged in particular between the insertion panels (58a,b) and the base of the insertion pockets (51a,b).

7. Distribution cabinet according to one of the preceding claims, **characterized in that**, in the case of a three-dimensional corner connection of three profile sections (50a,b,c), two profile sections (50a,b) are mitred and positioned one against the other, and connected by means of a groove nut (61) or of an angle positioned in the undercuts (57a,b) and clamped there, and the third profile section (50c) is positioned flush on said corner connection and screwed thereto by means of a clamping screw (62), the clamping screw (62) being screwed into a threaded bore (63) made in the corner of the angle or of the groove nut (61).

8. Distribution cabinet according to one of the preceding claims, **characterized in that** remaining between the inner body (60) and the outer cabinet body (3) is an air space which is open in the top and bottom regions, in particular in the direction of the surroundings, and serves for air to rise and thus heat to be dissipated from the inside of the outer cabinet body (3).

9. Distribution cabinet according to one of the preceding claims, **characterized in that** the distribution cabinet (1) has a top intermediate part (7) which is arranged between the top border of the body (3) and the cover (5), and in particular at least the body and/or the base box (2) and/or the cover (5) and/or the at least one door (4) consist of plastic and are produced, in particular, as a plastic injection moulding.

10. Distribution cabinet according to Claim 9, **characterized in that** the installation frame (6) is arranged, in the interior of the body (3), for accommodating electrical subassemblies, and in particular the installation frame (6), as seen in the transverse direction, does not have any undercuts with the body (3), with the result that it is possible for the body (3) to be raised off in the upward direction despite the installation frame (6) with all the components fastened thereon remaining on the base box (2).

11. Distribution cabinet according to Claim 9 or 10, **characterized in that** a frame-like mounting rack (9) for fastening the electrical subassemblies is arranged in a horizontally displaceable manner along the installation frame (6).

12. Assembly kit for producing a distribution cabinet which serves for accommodating weak-current distribution installations and is to be set up in particular outdoors, having
- a base box (2),
- an outer cabinet body (2) with at least one door (4),
- a cabinet cover (5), in particular made of plastic, in particular polycarbonate, and
- an installation frame (6) for arranging within the outer cabinet body (3),
**characterized in that**
- the installation frame (6) can be made up of profile sections (50), which each have at least two insertion pockets (51a,b) which extend away from one another at an angle, and
- of at least one insertion panel (58a,b), for insertion into the insertion pockets (51a,b) of the profile sections (50).

13. Assembly kit according to Claim 12, **characterized in that** the insertion panel (58a,b) is dimensioned such that, together with the installation frame (6), it forms at least one continuous outer surface as inner housing.

14. Assembly kit according to Claim 12 or 13, **characterized in that** the assembly kit comprises at least one additional part which can be arranged on the body (3), and in particular the additional part is a top intermediate part (7) which can be arranged between the top border of the body (3) and the cover (5).

15. Assembly kit or distribution cabinet according to one of the preceding claims, **characterized in that** the profile (50) has a cross section which is constant in the longitudinal direction.

16. Distribution cabinet or assembly kit according to one of the preceding claims, **characterized in that** the additional part is an installation frame (6) which is arranged in the interior of the body (3) and is intended for accommodating electrical subassemblies, and in particular the installation frame (6), as seen in the transverse direction, does not have any undercuts with the body (3), with the result that it is possible for the body (3) to be raised off in the upward direction despite the installation frame (6) with all the components fastened thereon remaining on the base box (2).

17. Distribution cabinet or assembly kit according to one of the preceding claims, **characterized in that** the distribution cabinet (1) has a bottom intermediate part (8) which is arranged between the bottom border of the installation frame (6) and the top border of the base box (2), and in particular the top intermediate part (7) and/or the bottom intermediate part (8) consist/consists of a material which inhibits electromagnetic radiation, in particular of aluminium.

18. Distribution cabinet or assembly kit according to one of the preceding claims, **characterized in that** the top intermediate part (7) has at least one false floor (11) and an in particular vertically upright border (12) running all the way round the sides and, with the body (3) and cover (5) placed in position, has openings, in particular slots (13), for the ambient air to flow in and out, in particular in the border (12) above the false floor (11).

19. Distribution cabinet or assembly kit according to one of the preceding claims, **characterized in that** arranged on the false floor (11), in close abutment against the latter, is at least one bottom cooling structure (14), which projects downwards, in the direction of the body (3), and has a large surface area, in particular with cooling ribs (16), made of a material with good thermal conductivity, in particular of aluminium, and arranged in particular at the same location as the bottom cooling body (14), but on the top side of the false floor (11), in close abutment against the false floor, is a top cooling body (15), which consists of a material with good conductivity, in particular aluminium, and has a large surface area, in particular cooling ribs, and in particular is identical to the bottom cooling body (14), and in particular the cooling ribs (16) of the top and/or bottom cooling body (15) or (14), respectively, run in the horizontal transverse direction (20) of the distribution cabinet (1) .

20. Distribution cabinet or assembly kit according to one of the preceding claims, **characterized in that** the cooling ribs (16) of the top and/or bottom cooling body (15) or (14), respectively, run radially, as seen in plan view, and in the central region, in particular centrally in relation to the geometrical point of contact with the cooling ribs (16), an impeller (38), in particular a radial-flow impeller with blades (39), which are bent in plan view in particular, is arranged in a state in which it is mounted such that it can be rotated about an in particular vertically upright axis (40), and in particular the cooling bodies (14) and (15) extend over more than half the basic surface area of the top intermediate part (7).

21. Distribution cabinet or assembly kit according to one of the preceding claims, **characterized in that** the slots (13) at the transition between the top intermediate part (7) and the cover (5) are produced, by the cover being placed in position, **in that**, in this region, the border (12) is set back inwards in certain sections in relation to the cover (5) positioned thereon, and the resulting slots (13') are overlapped in the horizontal direction by the cover (5).

22. Distribution cabinet or assembly kit according to one of the preceding claims, **characterized in that** arranged in the false floor (11) is a functional opening (17), for the insertion of a multiplicity of functional parts, for example an automatically closable functional cover (18), heat exchanger (19), fan (21), with air filter (22) and EMC filter (23), and in particular the false floor (31) has a plurality of cable through-passage openings distributed over its surface.

23. Distribution cabinet or assembly kit according to one of the preceding claims, **characterized in that** the bottom intermediate part (8) is of tray-like design and has a false floor (31), a peripheral body (32) and, in particular, air-outlet openings (33), and in particular the false floor (31) of the bottom intermediate part (8) has a functional opening (27), for fastening a multiplicity of functional elements therein, and in particular the false floor (31) is arranged in the bottom height region of the border (32).

24. Distribution cabinet or assembly kit according to one of the preceding claims, **characterized in that** the outlet openings (33) in the border (32), which is open at the bottom, are produced by the bottom intermediate part (8) being positioned on the base box (2), **in that** the top border of the base box (2) is set back inwards at least partially in the radial direction in relation to the bottom border of the bottom intermediate part (8) .

25. Distribution cabinet or assembly kit according to one of the preceding claims, **characterized in that** the distribution cabinet (1) has EMC shielding, in relation to the main chamber in the interior of the body (3), and in particular the EMC shielding is provided in the body (3) or on the inner surfaces of the body (3) or on the outer surfaces of the installation frame (6) and, in addition, the top and bottom horizontal surfaces of the body (3) are shielded, and in particular the top horizontal shielding is effected by the top intermediate part (7) and/or the bottom horizontal shielding is effected by the bottom intermediate part (8), and in particular the bottom horizontal EMC shielding is effected by a base plate (25) made of a material which shields electromagnetic radiation and is fastened, in particular, on the body (3), and in particular the EMC shielding consists of a material addition to the plastic of the body, of a coating of the inner surfaces of the body or of a woven fabric or of metal sheets, in particular perforated metal sheets, which are fitted, in particular, on the outsides of the installation frame (6) and/or the insides of the body (3) or of the door (4), and use is made here in each case of materials which inhibit electromagnetic radiation, in particular metals.

## Revendications

1. Coffret de distribution (1) destiné à recevoir des installations de distribution à courant faible, en particulier à disposer à l'air libre, avec
- un socle en caisson (2),
- un corps de coffret extérieur (3) avec au moins une porte (4),
- un couvercle de coffret (5), et
- un cadre de montage intérieur (6),
**caractérisé en ce que** le cadre de montage (6) est constitué de parties de profilé (50), dont la forme de la section transversale présente deux cavités d'enfichage (51a, b) dont les directions d'enfichage (52a, b) sont perpendiculaires l'une à l'autre.

2. Coffret de distribution selon la revendication 1, **caractérisé en ce que** les faces extérieures (53a, b) du profilé (50) orientées parallèlement aux directions d'enfichage (52a, b) sont planes et fermées et se fondent l'une dans l'autre dans l'angle extérieur (54).

3. Coffret de distribution selon l'une quelconque des revendications précédentes, **caractérisé en ce que** le profilé (50) présente sur la face intérieure de l'angle extérieur (54) une chambre creuse fermée (55), considérée en section transversale, qui présente au moins une extension en forme de rainure (56a, b).

4. Coffret de distribution selon l'une quelconque des revendications précédentes, **caractérisé en ce que** le profilé présente sur une face extérieure orientée à l'opposé des faces extérieures (53a, b) une autre cavité ouverte (57) en forme de rainure en contre-dépouille, dont la direction d'enfichage est en particulier parallèle à une des cavités d'enfichage (par exemple 51a), et notamment les contre-dépouilles (57a, b) sont disposées de part et d'autre, en particulier symétriquement, dans les flancs de la cavité (57).

5. Coffret de distribution selon l'une quelconque des revendications précédentes, **caractérisé en ce que** des plaques d'enfichage (58) dimensionnées de façon correspondante sont enfichées dans les cavités d'enfichage (51a, b) des parties de profilé (50) constituant le cadre de montage (6), de telle façon que le cadre de montage (6) ainsi complété forme un corps intérieur (60) largement fermé jusqu'au côté de la porte.

6. Coffret de distribution selon l'une quelconque des revendications précédentes, **caractérisé en ce que** les plaques d'enfichage (58a, b) sont composées de matériau de protection CEM, en particulier de tôle d'acier ou de tôle d'aluminium, et notamment un joint CEM (59) est disposé entre les plaques d'enfichage (58a, b) et le fond des cavités d'enfichage (51a, b).

7. Coffret de distribution selon l'une quelconque des revendications précédentes, **caractérisé en ce que**, avec un assemblage d'angle tridimensionnel de trois parties de profilé (50a, b, c), deux parties de profilé (50a, b) sont coupées en onglet et appliquées l'une contre l'autre et sont assemblées au moyen d'une cornière introduite dans les contre-dépouilles (57a, b) et bloquée dans celles-ci ou d'un écrou de rainure (61), et la troisième partie de profilé (50c) est appliquée bout à bout contre cet assemblage d'angle et y est vissée au moyen d'une vis de serrage (62), la vis de serrage (62) étant vissée dans un perçage fileté (63) pratiqué dans l'angle de la cornière ou de l'écrou de rainure (61).

8. Coffret de distribution selon l'une quelconque des revendications précédentes, **caractérisé en ce qu'**il subsiste entre le corps intérieur (60) et le corps de coffret extérieur (3) un espace d'air qui est ouvert dans la région supérieure et inférieure, en particulier vers l'ambiance, et qui sert à une montée d'air et de ce fait à une évacuation de chaleur de la face intérieure du corps de coffret extérieur (3).

9. Coffret de distribution selon l'une quelconque des revendications précédentes, **caractérisé en ce que** le coffret de distribution (1) présente une pièce intermédiaire supérieure (7), qui est disposée entre le bord supérieur (3) du corps (3) et le couvercle (5), et **en ce que** notamment au moins le corps et/ou le socle en caisson (2) et/ou le couvercle (5) et/ou au moins une porte (4) sont constitués de matière plastique, et en particulier sous forme de pièce de plastique moulée par injection.

10. Coffret de distribution selon la revendication 9, **caractérisé en ce que** le cadre de montage (6) est disposé à l'intérieur du corps (3) pour recevoir des ensembles électriques, et en particulier le cadre de montage (6), considéré en direction transversale, ne présente pas de contre-dépouilles avec le corps (3), de telle façon que le corps (3) puisse être soulevé vers le haut bien que le cadre de montage (6) avec tous les composants qui y sont fixés reste sur le socle en caisson (2).

11. Coffret de distribution selon la revendication 9 ou 10, **caractérisé en ce qu'**un support des ensembles en forme de cadre (9) pour la fixation des ensembles électriques est disposé de façon coulissante horizontalement le long du cadre de montage (6).

12. Ensemble de montage pour la construction d'un coffret de distribution, qui est destiné à recevoir des installations de distribution à courant faible, et qui doit notamment être installé à l'air libre, avec
- un socle en caisson (2),
- un corps de coffret extérieur (3) avec au moins une porte (4),
- un couvercle de coffret (5), en particulier en matière plastique, notamment en polycarbonate, et
- un cadre de montage (6) à disposer à l'intérieur du corps de coffret extérieur (3),
**caractérisé en ce que**
- le corps de coffret (6) peut être composé de parties de profilé (50), qui présentent chacune au moins deux cavités d'enfichage (51a, b) qui sont dirigées l'une vers l'autre sous un angle, et
- au moins une plaque d'enfichage (58a, b) à enficher dans les cavités d'enfichage (51a, b) des parties de profilé (50).

13. Ensemble de montage selon la revendication 12, **caractérisé en ce que** la plaque d'enfichage (58a, b) est dimensionnée de telle façon qu'elle forme avec le cadre de montage (6) au moins une face extérieure fermée en soi formant un boîtier intérieur.

14. Ensemble de montage selon la revendication 12 ou 13, **caractérisé en ce que** l'ensemble de montage comprend au moins une pièce supplémentaire, qui peut être disposée sur le corps (3), et en particulier la pièce supplémentaire est une pièce intermédiaire supérieure (7), qui peut être disposée entre le bord supérieur du corps (3) et le couvercle (5).

15. Ensemble de montage respectivement coffret de distribution selon l'une quelconque des revendications précédentes, **caractérisé en ce que** le profilé (50) présente une section transversale constante en direction longitudinale.

16. Coffret de distribution respectivement ensemble de montage selon l'une quelconque des revendications précédentes, **caractérisé en ce que** la pièce supplémentaire est un cadre de montage (6) disposé à l'intérieur du corps (3) pour recevoir des ensembles électriques, et en particulier le cadre de montage (6), considéré en direction transversale, ne présente pas de contre-dépouilles avec le corps (3), de telle façon que le corps (3) puisse être soulevé vers le haut bien que le cadre de montage (6) avec tous les composants qui y sont fixés reste sur le socle en caisson (2).

17. Coffret de distribution respectivement ensemble de montage selon l'une quelconque des revendications précédentes, **caractérisé en ce que** le coffret de distribution (1) présente une pièce intermédiaire inférieure (8), qui est disposée entre le bord inférieur du cadre de montage (6) et le bord supérieur du socle en caisson (2), et en particulier la pièce intermédiaire supérieure (7) et/ou la pièce intermédiaire inférieure (8) sont constituées d'un matériau arrêtant le rayonnement électromagnétique, en particulier d'aluminium.

18. Coffret de distribution respectivement ensemble de montage selon l'une quelconque des revendications précédentes, **caractérisé en ce que** la pièce intermédiaire supérieure (7) présente au moins un fond intermédiaire (11) ainsi qu'un bord (12) l'entourant latéralement, en particulier dressé verticalement, et, avec le couvercle (5) et le corps (3) placés, présente des ouvertures, en particulier des fentes (13), pour l'entrée et la sortie de l'air ambiant, notamment dans le bord (12) au-dessus du fond intermédiaire (11).

19. Coffret de distribution respectivement ensemble de montage selon l'une quelconque des revendications précédentes, **caractérisé en ce qu'**au moins un corps de refroidissement inférieur (14) avec une grande surface, en particulier avec des ailettes de refroidissement (16) en une matière à grande conductibilité thermique, en particulier en aluminium, et s'étendant vers le bas en direction du corps (3), est disposé sur le fond intermédiaire (11) en appui interne sur celui-ci et, en particulier sur le même côté que le corps de refroidissement inférieur (14) mais sur le côté supérieur du fond intermédiaire (11), un corps de refroidissement supérieur (15) est disposé en appui interne sur le fond intermédiaire, et est constitué d'un matériau avec une bonne conductibilité, en particulier d'aluminium, et présente une grande surface, en particulier des ailettes de refroidissement, et en particulier est identique au corps de refroidissement inférieur (14), et en particulier les ailettes de refroidissement (16) du corps de refroidissement supérieur et/ou inférieur (15) respectivement (14) sont orientées en direction transversale horizontale (20) du coffret de distribution (1).

20. Coffret de distribution respectivement ensemble de montage selon l'une quelconque des revendications précédentes, **caractérisé en ce que** les ailettes de refroidissement (16) du corps de refroidissement supérieur et/ou inférieur (15) respectivement (14), considérées en plan, sont orientées radialement et dans la région centrale, en particulier au centre au point de rencontre des ailettes de refroidissement (16), une roue de ventilateur (38), en particulier une roue de ventilateur radial avec en particulier des pales (39) courbes vues en plan, est disposée de façon rotative autour d'un axe (40) dressé en particulier verticalement, et en particulier les corps de refroidissement (14) respectivement (15) s'étendent sur plus de la moitié de la surface de base de la pièce intermédiaire supérieure (7).

21. Coffret de distribution respectivement ensemble de montage selon l'une quelconque des revendications précédentes, **caractérisé en ce que** les fentes (13) à la transition entre la pièce intermédiaire supérieure (7) et le couvercle (5) apparaissent par le placement du couvercle, le bord (12) étant dans cette région partiellement en retrait vers l'intérieur par rapport au couvercle (5) posé dessus, et les fentes (13') ainsi formées sont recouvertes en direction horizontale par le couvercle (5).

22. Coffret de distribution respectivement ensemble de montage selon l'une quelconque des revendications précédentes, **caractérisé en ce qu'**une ouverture fonctionnelle (17) est pratiquée dans le fond intermédiaire (11), pour l'introduction d'une pluralité de pièces fonctionnelles, par exemple un couvercle fonctionnel à fermeture automatique (18), un échangeur de chaleur (19), un ventilateur (21), avec filtre à air (22) et filtre CEM (23), et en particulier le fond intermédiaire (31) présente plusieurs ouvertures de passage de câbles distribuées sur sa surface.

23. Coffret de distribution respectivement ensemble de montage selon l'une quelconque des revendications précédentes, **caractérisé en ce que** la pièce intermédiaire inférieure (8) est en forme de cuvette et présente un fond intermédiaire (31), un bord périphérique (32) et en particulier des ouvertures de sortie d'air (33), et en particulier le fond intermédiaire (31) de la pièce intermédiaire inférieure (8) présente une ouverture fonctionnelle (27) pour fixer dans celui-ci une pluralité d'éléments fonctionnels, et en particulier le fond intermédiaire (31) est disposé dans la zone inférieure de la hauteur du bord (32).

24. Coffret de distribution respectivement ensemble de montage selon l'une quelconque des revendications précédentes, **caractérisé en ce que** les ouvertures de sortie (33) apparaissent dans le bord ouvert vers le bas (32) par placement de la pièce intermédiaire inférieure (8) sur le socle en caisson (2), du fait que le bord supérieur du socle en caisson (2) est au moins partiellement en retrait radialement vers l'intérieur par rapport au bord inférieur de la pièce intermédiaire inférieure (8).

25. Coffret de distribution respectivement ensemble de montage selon l'une quelconque des revendications précédentes, **caractérisé en ce que** le coffret de distribution (1) comporte un blindage CEM, concernant l'espace principal à l'intérieur du corps (3), et en particulier le blindage CEM est présent dans le corps (3) ou sur les faces intérieures du corps (3) ou sur les faces extérieures du cadre de montage (6) et en plus les faces horizontales supérieures et inférieures du corps (3) sont blindées et en particulier le blindage horizontal supérieur est assuré par la pièce intermédiaire supérieure (7) et/ou le blindage horizontal inférieur est assuré par la pièce intermédiaire inférieure (8), et en particulier le blindage CEM horizontal inférieur est assuré par une plaque de fond (25) en un matériau arrêtant le rayonnement électromagnétique, qui est en particulier fixée au corps (3), et en particulier le blindage CEM se compose d'une addition de matériau dans la matière plastique du corps, d'un revêtement des faces intérieures du corps ou d'un treillis ou de tôles, en particulier de tôles perforées, qui sont en particulier montés sur les faces extérieures du cadre de montage (6) et/ou sur les faces intérieures du corps (3), respectivement de la porte (4), et on utilise en l'occurrence des matériaux arrêtant le rayonnement électromagnétique, en particulier des métaux.
